(19) **Europäisches Patentamt / European Patent Office / Office européen des brevets**

(11) **EP 1 820 048 B1**

(12) **EUROPÄISCHE PATENTSCHRIFT**

(45) Veröffentlichungstag und Bekanntmachung des Hinweises auf die Patenterteilung:
**28.01.2009   Patentblatt 2009/05**

(21) Anmeldenummer: **05803950.4**

(22) Anmeldetag: **10.11.2005**

(51) Int Cl.:
*G01V 7/00* *(2006.01)*

(86) Internationale Anmeldenummer:
**PCT/EP2005/012041**

(87) Internationale Veröffentlichungsnummer:
**WO 2006/061077 (15.06.2006 Gazette 2006/24)**

(54) **VORRICHTUNG UND VERFAHREN ZUR MATERIALDETEKTION MITTELS GRAVITATIONSFELDAUSWERTUNG**

DEVICE AND METHOD FOR DETECTING MATERIAL BY WAY OF GRAVITATIONAL FIELD ANALYSIS

DISPOSITIF ET PROCEDE DE DETECTION DE MATIERE AU MOYEN D'UNE EVALUATION DE CHAMP GRAVITATIONNEL

(84) Benannte Vertragsstaaten:
**DE FR GB**

(30) Priorität: **07.12.2004   DE 102004058909**
**07.03.2005   DE 102005010398**
**07.03.2005   US 75045**

(43) Veröffentlichungstag der Anmeldung:
**22.08.2007   Patentblatt 2007/34**

(73) Patentinhaber: **VEGA Grieshaber KG**
**77709 Wolfach (DE)**

(72) Erfinder: **RAFFALT, Felix**
**77756 Hausach (DE)**

(74) Vertreter: **Kopf, Korbinian Paul**
**Maiwald Patentanwalts GmbH**
**Elisenhof**
**Elisenstrasse 3**
**80335 München (DE)**

(56) Entgegenhaltungen:

| | |
|---|---|
| WO-A-99/32906 | DE-C1- 19 710 269 |
| US-A- 1 796 150 | US-A- 3 424 006 |
| US-A- 3 449 956 | US-A- 3 906 795 |
| US-A- 5 948 035 | US-B1- 6 799 462 |

- PATENT ABSTRACTS OF JAPAN Bd. 1999, Nr. 03, 31. März 1999 (1999-03-31) -& JP 10 332470 A (ISHIKAWAJIMA HARIMA HEAVY IND CO LTD), 18. Dezember 1998 (1998-12-18)
- PATENT ABSTRACTS OF JAPAN Bd. 2000, Nr. 06, 22. September 2000 (2000-09-22) -& JP 2000 085889 A (SHIBUYA KOGYO CO LTD), 28. März 2000 (2000-03-28)
- PATENT ABSTRACTS OF JAPAN Bd. 017, Nr. 399 (P-1579), 26. Juli 1993 (1993-07-26) -& JP 05 072097 A (NIPPON AQUA KK), 23. März 1993 (1993-03-23)

EP 1 820 048 B1

**Beschreibung**

Die vorliegende Erfindung betrifft die Materialdetektion mittels Gravitationsfeldauswertung. Insbesondere betrifft die vorliegende Erfindung eine Gravimetereinheit zum Ermitteln einer Gravitationsfeldstärke, einen Sensor zur Materialdetektion mittels einer Gravitationsfeldauswertung, ein Verfahren zur Füllstandsmessung eines Füllgutes in einem Behälter, die Verwendung eines Sensors als Füllstandsmesser, die Verwendung eines Sensors als Nährungsschalter, ein Programmelement zur Füllstandsmessung und ein computerlesbares Speichermedium.

Von jedem massebehafteten Körper wird ein Gravitationsfeld erzeugt, welches eine Anziehungskraft auf andere Massen ausübt. Bei einem kugelförmigen Körper mit homogener Massenverteilung ist das an seiner Oberfläche auftretende Gravitationsfeld proportional zum Kugeldurchmesser und seiner Dichte. Außerhalb des Körpers nimmt die Feldstärke seines Gravitationsfeldes mit dem Kehrwert des Abstandsquadrates zum Kugelmittelpunkt ab.

Das Gravitationsfeld der Erde, das als Fallbeschleunigung wirkt, hat auf der Erdoberfläche einen Wert von etwa 9,81 Meter pro Quadratsekunde. Ein kugelförmiges Wasservolumen von 1m Durchmesser erzeugt an seiner Oberfläche ein Gravitationseigenfeld, das sich im Vergleich zum Erdfeld, wie 1 zu 70.000.000 verhält.

Dieser Wert ist zwar äußerst gering, lässt sich jedoch mit Hilfe eines Gravimeterinstrumentes messen. Diese Geräte bestehen in der Regel aus einem präzisionsmechanischen FederMasse-System, auf welches das zu messende Gravitationsfeld einwirkt. Die Feder wird dabei durch die gravitationsproportionale Gewichtskraft des Masseelementes gedehnt, und ihre Längenänderung, oder eine benötigte Kompensationskraft zum Erreichen einer definierten Referenzlänge, als Maß für die einwirkende Gravitationsfeldstärke herangezogen.

Es werden auch Schwerependel, Schwimmkörper und Fallkörperanordnungen zur Gravitationsfeldmessung verwendet.

Neben wissenschaftlichen Anwendungen, wie der Messung der von Mond und Sonne erzeugten Gezeitenkräfte, werden Gravimeterinstrumente in erster Linie bei der Suche und Erkundung von Bodenschätzen wie Erdöl, Gas, Kohle, Erze und Salze eingesetzt. Dabei wird ausgenützt, dass diese Materialien in der Regel eine abweichende Dichte zum normalen Untergrundgestein aufweisen, bzw. dessen Dichte ändern, wenn sie in den Gesteinsporen enthalten sind.

In dem zu untersuchenden Gebiet wird ein Gravimeterinstrument entlang der Erdoberfläche bewegt, und die Gravitationsmesswerte sowie deren geographische Position aufgezeichnet. Das Gravimeter kann auch an ein Flugzeug montiert werden, welches das zu untersuchende Gebiet überfliegt. Weiterhin ist es üblich Gravimeterinstrumente in Bohrlöcher abzusenken, und beim Absenkvorgang die gemessenen Gravitationsfeldwerte und zugehörige Tiefenwerte aufzuzeichnen.

Das Ergebnis dieser Messreihen sind Landkarten die geologische Schwerefeldanomalien darstellen, bzw. Tiefendiagramme welche das Feld im Erduntergrund zeigen.

Der geschulte Geologe kann nun anhand der erstellten Karten und Diagramme, vorhandene Dichteunterschiede im Erduntergrund erkennen, und damit auf das Vorkommen von Lagerstätten und deren Abbauwürdigkeit Rückschlüsse ziehen.

US 6,612,171 B1 offenbart ein Gravitationsmessgerät für die Ausmessung des Gravitationsfelds in Bohrlöchern, um die Dichte von Formationen im Erduntergrund zu ermitteln. Das offenbarte Gravitationsmessgerät ist hierbei zwischen zwei Positionen bewegbar, um eine Differenzmessung durchzuführen.

Die DE 689 15 45 T2 offenbart ein Gravitationsgradiometer. Hiermit sollen außerdiagonale Komponenten eines Gravitationsgradienttensors gemessen werden, insbesondere ist ein besonderes Biegedrehlager offenbart.

Die WO 98/57197 offenbart ebenfalls ein Gravitationsgradiometer. Hierin ist erläutert, dass die Gravitationsmessung oftmals von Flugzeugen aus vorgenommen wird, um Erdölvorkommen zu entdecken. Im Flugzeug auftretende und damit auf das Gravitationsgradiometer einwirkende Beschleunigungen sollen in dem in dieser Druckschrift erläuterten Gravitationsgradiometer kompensierbar sein.

US 67 99 462, US 34 24 006 und US 34 49 956 beschreiben gravimetrische Messverfahren, bei denen ein Massekörper durch ein Magnetfeld in Schwebe gehalten wird.

All die bekannten Gravitationsmessgeräte sind für die Verwendung als industrietaugliche Sensoren zur Detektion von Materialmenge bzw. zur Ermittlung eines Füllstandes eines Füllgutes in einem Behälter nicht geeignet. Sie sind zum einen viel zu teuer, zu voluminös und zeigen lediglich das Gravitationsfeld in einer Raumrichtung an. Die ausgegebene Gravitationsfeldanzeige bedarf der Interpretation einer Fachkraft um weitere Informationen daraus ableiten zu können.

Weiterhin sind Ansprechzeit und Energieverbrauch der bekannten Gravitationsmesssysteme für einen industriellen Füllstandsensor viel zu hoch.

Es ist eine Aufgabe der vorliegenden Erfindung, einen Sensor zur direkten Messung und Ausgabe eines Füllstandwertes bereitzustellen.

Gemäß einem Ausführungsbeispiel der vorliegenden Erfindung wird die obige Aufgabe mittels einer Gravimetereinheit zum Ermitteln einer Gravitationsfeldstärke gelöst, die Gravimetereinheit umfassend einen ersten Schwebekörper, einen ersten Detektor und eine Quelle zur Erzeugung eines Feldes, wobei der erste Schwebekörper durch ein von der Quelle erzeugtes Feld berührungslos in der Schwebe haltbar ist, wobei eine erste Position des Schwebekörpers durch den ersten Detektor detektierbar ist, wobei die Gravimetereinheit ausgeführt ist, erste Daten auf Basis der detektierten ersten Position oder dem erzeugten Feld zu ermitteln, und wobei die ersten Daten mit einer ersten Gravitationsfeldstärke an einem ersten Ort korrespondieren.

Vorteilhafterweise wird somit eine kostengünstige, miniaturisierte und hochauflösende Gravimetermesszelle bereitgestellt, bei der ein gravitationsfelddetektierendes Masseelement mittels elektrostatischer Kraftfelder berührungslos dreidimensional in der Schwebe gehalten wird. Die Notwendigkeit eines mechanischen Federelementes entfällt damit.

Der vorliegenden Erfindung gemäß diesem Aspekt liegt der Gedanke zugrunde, über eine Schwebehalterung eines Schwebekörpers die auf diesen wirkende Gravitationskraft zu messen. Beispielsweise kann die Kenntnis der Kompensationskraft, die notwendig ist, den Schwebekörper in seiner ursprünglichen Position zu halten bzw. in seine ursprüngliche Position zurückzuführen, dazu verwendet werden, Rückschlüsse auf die auf den Schwebekörper einwirkende Gravitationskraft zu ziehen. Somit stellt die Erfindung eine kostengünstige, miniaturisierte und hochauflösende Gravimetereinheit bereit, mit welcher Gravitationsfeldstärken ohne mechanische Federelemente oder dergleichen dreidimensional ermittelt werden können.

Das schwebende Masseelement wird vorzugsweise direkt oberhalb eines integrierten Halbleiterschaltkreises angeordnet, so dass beispielsweise Detektor und Quelle zumindest teilweise direkt auf diesem angebracht werden können.

Gemäß einem weiteren Ausführungsbeispiel der vorliegenden Erfindung ist das Feld ausgewählt aus der Gruppe bestehend aus elektrischem Feld, magnetischem Feld, elektromagnetischem Feld und mechanischem Strömungsfeld.

Vorteilhafterweise können somit über entsprechende Bauelemente, wie beispielsweise Spulen oder Kondensatorplatten, auf einfache Weise Felder erzeugt werden, welche den Schwebekörper in der Schwebe halten.

Gemäß einem weiteren Ausführungsbeispiel der vorliegenden Erfindung ist der erste Detektor zur kapazitiven, induktiven, konduktiven oder optischen Detektion der ersten Position des ersten Schwebekörpers ausgeführt. Die kapazitive Positionsdetektion kann beispielsweise über eine zweite Elektrode erfolgen, welche zur Kapazitätsmessung zwischen Schwebekörper und der zweiten Elektrode verwendbar ist. Gemäß einem Aspekt der vorliegenden Erfindung kann der Schwebekörper beispielsweise innerhalb eines Hohlraums angeordnet sein, welcher mit einem Dielektrikum ausgefüllt ist. Dies kann die Sensitivität der kapazitiven Messung erhöhen oder z. B. auch den Schwebekörper stabilisieren. Natürlich kann die kapazitive Positionsdetektion auch über ein Elektrodenpaar erfolgen.

Für die induktive Messung können beispielsweise miniaturisierte Spulen in die Gravimetereinheit integriert sein, welche ein magnetisches Feld erzeugen, das sich auf den Schwebekörper auswirkt. Beispielsweise können Induktionsströme in dem Schwebekörper erzeugt werden.

Eine optische Positionsbestimmung bietet den Vorteil, abgesehen vom Strahlungsdruck der Photonen, keine zusätzlichen Kräfte in den Schwebekörper einzukoppeln. Beispielsweise können hier interferometrische Verfahren angewendet werden, wie sie aus der Optik bekannt sind.

Gemäß einem weiteren Ausführungsbeispiel der vorliegenden Erfindung umfasst die Gravimetereinheit weiterhin einen zweiten Schwebekörper und einen zweiten Detektor, wobei eine zweite Position des zweiten Schwebekörpers durch den zweiten Detektor detektierbar ist und wobei die Gravimetereinheit ausgeführt ist, die ersten Daten auf Basis der gemessenen ersten Position und der gemessenen zweiten Position zu erzeugen.

Vorteilhafterweise können durch die Verwendung zweier Schwebekörper innerhalb der Gravimetereinheit Eichungen durchgeführt werden bzw. Alterungsprozesse oder temperaturschwankungsbedingte Drifterscheinungen in den Messdaten ausgeglichen werden.

Hierbei ist zu beachten, dass die Gravimetereinheit, obgleich sie die erste Position des ersten Schwebekörpers und die zweite Position des zweiten Schwebekörpers bestimmt, daraus nur ein Datensatz erstellt wird, der Aufschluss über das Gravitationsfeld am Ort der Gravimetereinheit gibt. Der Einsatz mehrerer Schwebekörper in der Gravimetereinheit kann somit die Systemgenauigkeit und -sicherheit erhöhen, liefert aber in dem vorliegenden Fall nur einen gemeinsamen Datensatz.

Gemäß einem weiteren Ausführungsbeispiel der vorliegenden Erfindung umfasst die Gravimetereinheit weiterhin eine Regelungseinrichtung, welche zum Halten des ersten Schwebekörpers in einer Ausgangsposition ausgeführt ist.

Beispielsweise kann die Regelungseinrichtung Regelungssignale an die Quelle zur Erzeugung des Feldes senden, so dass die Feldstärke entsprechend variiert wird, um einer veränderten Gravitationsbeschleunigung entgegenzuwirken und eine Auslenkung des Schwebekörpers aus der Nullposition zu kompensieren. Die Steuergrößen, welche zur Kompensation veränderter Gravitationsbeschleunigungen verwendet werden, können erfindungsgemäß in die Bestimmung der Gravitationsfeldstärke mit einfließen.

Gemäß einem weiteren Ausführungsbeispiel der vorliegenden Erfindung umfasst die Gravimetereinheit weiterhin eine Speichereinrichtung zur Speicherung von Referenzwerten.

Weiterhin ist es möglich, diese Referenzwerte im Zuge einer Eichung der Gravimetereinheit in der Speichereinrichtung zu speichern und somit nachfolgende Messungen zu vereinfachen oder zu kalibrieren. Durch die Anbringung einer Speichereinrichtung in der Gravimetereinheit kann ein Datenaustausch zwischen der Gravimetereinheit und externer Auswerteeinheiten oder Anzeigeeinheiten minimiert werden.

Gemäß einem weiteren Ausführungsbeispiel der vorliegenden Erfindung ist ein Sensor zur Materialdetektion mittels einer Gravitationsfeldauswertung angegeben, wobei der Sensor eine erste Gravimetereinheit, eine zweite Gravimetereinheit und eine Kommunikationsschnittstelle umfasst. Die erste Gravimetereinheit ist zum Ermitteln erster Daten ausgeführt, welche mit einer ersten Gravitationsfeldstärke an einem ersten Ort korrespondieren. Die zweite Gravimetereinheit ist zum Ermitteln zweiter Daten ausgeführt, welche mit einer zweiten Gravitationsfeldstärke an einem zweiten Ort korrespondieren und die Kommunikationsschnittstelle ist zur Übertragung der ersten Daten und der zweiten Daten an eine Auswerteeinheit ausgeführt.

Die Unterscheidung zwischen einem Gravitationsfeld, das beispielsweise von einem zu detektierten Füllgut ausgeht, und den übrigen Gravitationsfeldern, die von Massen stammen, die nicht gemessen werden sollen, geschieht besonders vorteilhaft dadurch, dass die Gradientenwerte des Gravitationsfeldes im Bereich des zu messenden Füllgutes ermittelt werden und aus deren räumlichen Verlauf die Masseverteilung in der näheren Umgebung bestimmt wird.

Vorteilhafterweise wird gemäß diesem Ausführungsbeispiel der vorliegenden Erfindung die Gravitationsfeldstärke in der Nähe der zu detektierenden Masse an verschiedenen Punkten im Raum gemessen. Da die Abstände zwischen den Gravitationsmesspunkten und der zu detektierenden Masse bekannt sind, kann anhand der auftretenden Feldgradientenwerte der Anteil an der gemessenen Summenfeldstärke ermittelt werden, der auf die Beobachtungsposition für die unbekannte Masse entfällt.

Gemäß diesem Ausführungsbeispiel der vorliegenden Erfindung wird ein Industriesensor angegeben, insbesondere ein Sensor zur Ermittlung von Tankfüllständen, der es gestattet, Materialien, insbesondere Füllgüter, berührungslos durch geschlossene Tankwände hindurch zu messen. Der Tankfüllstand wird durch Messung und Auswertung des Füllguteigengravitationsfeldes durch den Sensor ermittelt. Vorteilhafterweise werden alle Anforderungen erfüllt, die an einen Sensor zum Einsatz in industriellen Anlagen gestellt werden.

Hierfür ist der Sensor statisch aufgebaut, ohne dass ein Gravimeterinstrument mechanisch über eine Messstrekke oder eine Fläche hinweg bewegt wird. Das erzeugte Messergebnis bedarf nicht der Weiterbearbeitung oder Interpretation einer Fachkraft, sondern kann den direkt anzeigbaren Füllwert darstellen. Dieser kann kontinuierlich, unterbrechungsfrei und in Echtzeit zur Verfügung stehen. Das Messergebnis beinhaltet keine geologischen oder astronomischen Komponenten, wie schwankender Wassergehalt des Erduntergrundes, tektonische Massenverlagerungen im Erdmantel oder Gezeitenkräfte, wie sie gerade von klassischen Gravitationssensoren gemessen werden. Ebenso können in der Umgebung sich bewegende Massen, wie Personen und Fahrzeuge, im Messergebnis unterdrückt werden.

Gemäß einem weiteren Ausführungsbeispiel der vorliegenden Erfindung basieren die ermittelten ersten Daten auf ersten Schwebekörperpositionsdaten oder auf ersten Regelungsparametern einer ersten Regelungseinrichtung. Weiterhin basieren die ermittelten zweiten Daten auf zweiten Schwebekörperpositionsdaten oder auf zweiten Regelungsparametem einer zweiten Regelungseinrichtung.

Die Schwebekörperposition oder aber auch die Regelungsparameter, bei denen es sich zum Beispiel um eine an eine Kondensatorplatte angelegte Spannung handeln kann, stellen leicht zu messende und genau zu bestimmende Daten dar, über welche fundierte Aussagen über entsprechende, auf den Schwebekörper einwirkende Gravitationskräfte getroffen werden können.

Gemäß einem Aspekt der vorliegenden Erfindung sind die erste und die zweite Gravimetereinheit relativ zueinander an festen Positionen im Sensor angeordnet. Weiterhin können die beiden Gravimetereinheiten werkseitig derart beabstandet werden, dass eine optimale Messung für beispielsweise einen ganz bestimmten Behälter möglich ist.

Gemäß einem weiteren Ausführungsbeispiel der vorliegenden Erfindung ist die erste Gravimetereinheit um eine Achse rotierbar oder entlang einer Achse verschiebbar angeordnet, wobei während einer Rotation oder Verschiebung kontinuierlich Daten aufgenommen werden, welche auf den detektierten ersten Positionen oder den erzeugten Feldern innerhalb der Gravimetereinheit basieren. Diese aufgenommenen Daten können dann zu einem Volumendaten-, satz zusammengefasst werden, welcher die Topologie eines Gravitationsfeldes repräsentiert. Über diesen Volumendatensatz können somit Rückschlüsse auf eine örtliche Massenverteilung in der Umgebung des Sensors gezogen werden. Zur Auswertung des Datensatzes und zur Bildgebung können bekannte Verfahren aus z.B. der Computertomographie verwendet werden.

Gemäß einem Aspekt der vorliegenden Erfindung umfasst der Sensor eine Vielzahl von Gravimetereinheiten, welche linienartig, flächenartig oder räumlich angeordnet sind, so dass ein ein-, zwei- oder dreidimensionaler Datensatz ermittelt werden kann, welcher eine Gravitationsfeldverteilung repräsentiert.

Weiterhin kann der Sensor eine Auswerteeinheit umfassen, welche zur Entgegennahme der ersten Daten und der zweiten Daten von der Kommunikationsstelle ausgeführt ist, wobei die Auswerteeinheit zur Berechnung eines Gradienten eines Gravitationsfeldes auf Basis der ersten Daten und der zweiten Daten ausgeführt ist.

Gemäß einem Aspekt der vorliegenden Erfindung kann die Auswerteeinheit beispielsweise zusammen mit dem Sensor auf einem Halbleiterchip in Form einer integrierten Schaltung ausgebildet sein. Natürlich ist es auch möglich,

**EP 1 820 048 B1**

dass die Auswerteeinheit extern angeordnet ist und die Daten von der Kommunikationsschnittstelle über beispielsweise eine Funkübertragung oder ein anderes kabelloses Datenübertragungsverfahren erhält. Natürlich kann die Kommunikationsschnütstelle auch über eine Datenleitung mit der Auswerteeinheit verbunden sein.

Gemäß einem weiteren Ausführungsbeispiel der vorliegenden Erfindung ist die Verwendung eines erfindungsgemäßen Sensors als Füllstandsmesser angegeben. Hierfür kann der Sensor in der Nähe eines Behälters angeordnet werden und den Füllstand im Inneren des Behälters messen.

Weiterhin kann, gemäß einem Aspekt der Erfindung, der Sensors als Näherungssensor verwendet werden, der beispielsweise detektiert, ob eine Tür offen oder geschlossen ist, oder wie weit ein entsprechender Gegenstand vom Sensor entfernt ist oder mit welcher Geschwindigkeit er sich dem Sensor nähert.

Gemäß einem weiteren Ausführungsbeispiel der vorliegenden Erfindung ist die Verwendung eines Gravimeters als Füllstandsmesser angegeben, welches zum Beispiel ein Verfahren zur Füllstandsmessung gemäß einem Ausführungsbeispiel der vorliegenden Erfindung ausführt.

Auch kann, gemäß einem Aspekt der vorliegenden Erfindung, ein Gravimeter als Näherungssensor Anwendung finden, zum Beispiel zur Detektion von Entfernungen.

Gemäß einem weiteren Ausführungsbeispiel der vorliegenden Erfindung ist die Verwendung einer erfindungsgemäßen Gravimetereinheit als Beschleunigungsmesser angegeben, welche zur Messung von Beschleunigungen, beispielsweise innerhalb eines Fahrzeugs, Flugzeugs oder einem anderen bewegten oder schwingenden Objekt, wie einer Person oder einer Maschine eingesetzt wird.

Gemäß einem weiteren Ausführungsbeispiel der vorliegenden Erfindung ist ein Verfahren zur Füllstandsmessung eines Füllgutes in einem Behälter mittels einer Gravitationsfeldauswertung angegeben, wobei das Verfahren die folgenden Schritte umfasst: Ermitteln von ersten Daten, welche mit einer ersten Gravitationsfeldstärke an einem ersten Ort korrespondieren, durch eine erste Gravimetereinheit; Ermitteln von zweiten Daten, welche mit einer zweiten Gravitationsfeldstärke an einem zweiten Ort korrespondieren, durch eine zweite Gravimetereinheit; Berechnen eines Füllstandes des Füllgutes auf Basis der ermittelten ersten und zweiten Daten.

Vorteilhafterweise ermöglicht die Verwendung einer Gravitationsfeldauswertung zur Füllstandsmessung eine berührungslose Messung, welche keinen Kontakt mit dem Messobjekt erfordert. Weiterhin ist für das erfindungsgemäße Verfahren keine Strahlungsquelle oder dergleichen notwendig, welche einen Messstrahl emittiert, welcher beispielsweise nachfolgend von dem Füllgut reflektiert wird, so dass nachfolgend Aussagen über die Füllstandshöhe getroffen werden können. Vielmehr bedient sich das erfindungsgemäße Verfahren der Messung von Gravitationsfeldern, welche von dem Füllgut erzeugt werden. Eine Einbringung des Sensors in den Behälter ist hierfür nicht erforderlich. Auch wird durch die Messung keine Energie in das Füllgut eingebracht.

Gemäß einem weitern Ausführungsbeispiel der vorliegenden Erfindung ist ein Verfahren zur Aufnahme eines Volumendatensatzes angegeben, bei dem die erste Gravimetereinheit um eine Achse rotiert oder entlang einer Achse verschoben wird. Auch kann eine Kombination aus Verschiebung und Rotation erfolgen, so dass sich die Gravimetereinheit entlang einer beliebig ein- zwei- oder dreidimensional verlaufenden Bahn bewegen kann. Während der Bewegung erstellt die Gravimetereinheit einen ersten Volumendatensatz, welcher die ersten Daten umfasst. Zur Ausführung dieses beispielhaften Verfahrens ist nur eine Gravimetereinheit notwendig, es können aber auch mehrere Gravimetereinheiten vorgesehen sein, was zum Beispiel zu einer schnelleren Aufnahme der Volumendaten führen kann, oder auch Bewegungsdimensionen im Bahnverlauf einzusparen gestattet.

Die vorliegende Erfindung betrifft auch ein Programmelement zur Füllstandsmessung eines Füllgutes in einem Behälter mittels einer Gravitationsfeldauswertung und ein computerlesbares Speichermedium, auf dem ein Computerprogramm zur Füllstandsmessung eines Füllgutes in einem Behälter mittels einer Gravitationsfeldauswertung gespeichert ist. Hierbei leitet das Computerprogramm einen Prozessor an, ein Verfahren gemäß einem Ausführungsbeispiel der vorliegenden Erfindung auszuführen, wenn es auf dem Prozessor ausgeführt wird. Das Programmelement gemäß einem Ausführungsbeispiel der vorliegenden Erfindung kann vorzugsweise in den Arbeitsspeicher eines Datenprozessors geladen werden. Der Datenprozessor kann ausgeführt sein, beispielhafte Ausführungsformen des Verfahrens der vorliegenden Erfindung durchzuführen. Weiterhin kann das Computerprogramm in jeder Programmiersprache, wie beispielsweise C++, geschrieben sein und kann auf einem computerlesbaren Speichermedium, wie beispielsweise einer CD-ROM, gespeichert sein. Weiterhin kann das Computerprogramm über ein Netzwerk erhältlich sein, wie beispielsweise das WorldWide-Web, von dem es in einen Prozessor oder Computer geladen werden kann.

Weitere Aufgaben, Ausführungsformen und Vorteile der Erfindung ergeben sich aus den Unteransprüchen und den nebengeordneten Ansprüchen.

Im Folgenden wird die Erfindung anhand von Ausführungsbeispielen unter Bezugnahme auf die Zeichnungen näher beschrieben.

Fig. 1 zeigt einen Querschnitt durch eine beispielhafte Ausführungsform einer Gravimetereinheit gemäß der vorliegenden Erfindung.

Fig. 2 zeigt eine Draufsicht auf einen Halbleiterchip mit darauf aufgebrachten Elektroden der in Fig. 1 dargestellten Ausführungsform der erfindungsgemäßen Gravimetereinheit.

Fig. 3 zeigt einen Querschnitt durch ein weiteres Ausführungsbeispiel einer Gravimetereinheit gemäß der vorliegenden Erfindung.

Fig. 4 zeigt eine Draufsicht auf einen Halbleiterchip mit darauf angebrachten Elektroden des in Fig. 3 dargestellten Ausführungsbeispiels der Gravimetereinheit.

Fig. 5 zeigt einen Querschnitt durch ein Ausführungsbeispiel einer Gravimetereinheit gemäß einer weiteren beispielhaften Ausführungsform der vorliegenden Erfindung.

Fig. 6 zeigt eine schematische Seitenansicht eines Gravitations-Füllstandsgrenzschalters, der horizontal seitlich an einen Füllgutbehälter montiert ist, gemäß einem Ausführungsbeispiel der vorliegenden Erfindung.

Fig. 7 zeigt eine schematische Querschnittsansicht eines teilgefüllten Füllgutbehälters, an dem fünf verschiedene Typen von kontinuierlich messenden Sensoren gemäß Ausführungsbeispielen der vorliegenden Erfindung montiert sind.

Fig. 8 zeigt ein weiteres Ausführungsbeispiel eines Gravimeters gemäß der vorliegenden Erfindung.

Fig. 9 zeigt ein weiteres Ausführungsbeispiel eines Gravimeters gemäß einem weiteren Ausführungsbeispiel der vorliegenden Erfindung.

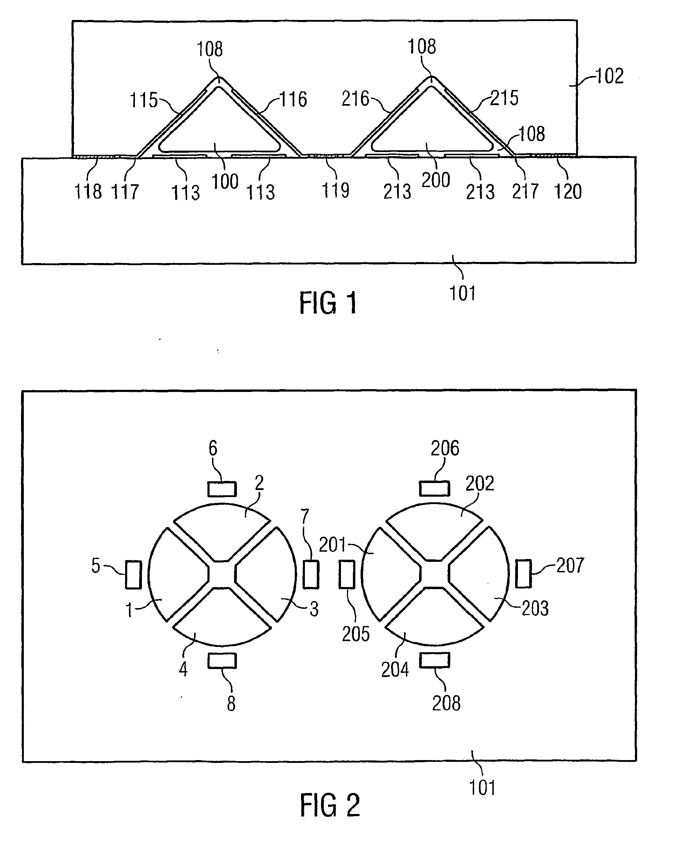

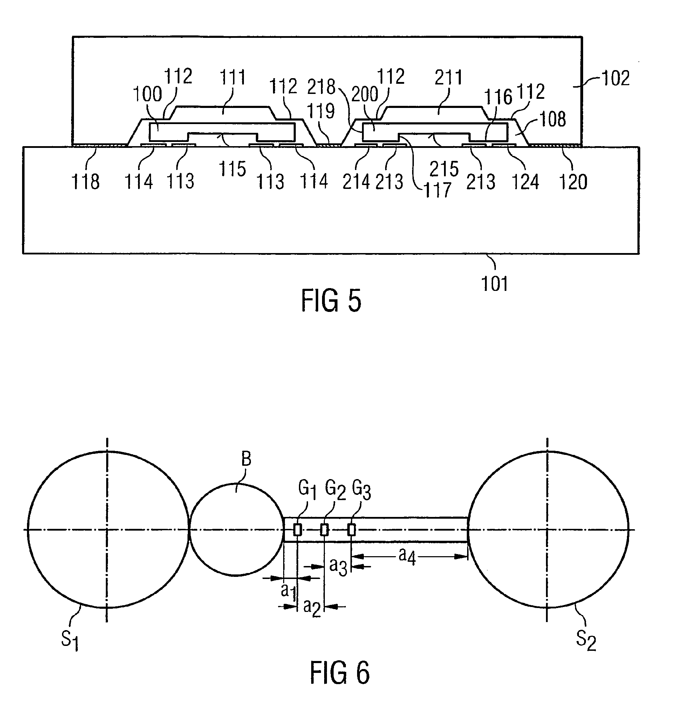

Fig. 1 zeigt einen Querschnitt durch eine beispielhafte Ausführungsform einer Gravimetereinheit gemäß der vorliegenden Erfindung, welche weiter unten näher erläutert wird. Mehrere dieser Gravimetereinheiten können in einen Füllstandssensor oder einen Füllstandsgrenzschalter integriert werden. Ein entsprechendes Ausführungsbeispiel ist in Fig. 6 gezeigt.

Fig. 6 zeigt eine schematische Seitenansicht eines Gravitations-Füllstandsgrenzschalters, der horizontal seitlich an einen Füllgutbehälter montiert ist, gemäß einem Ausführungsbeispiel der vorliegenden Erfindung.

Der erfindungsgemäße Füllstandsensor beinhaltet mindestens 2 Gravimetereinheiten G1, G2, welche an festen Positionen am, oder in unmittelbarer Nähe des, zu messenden Füllgutbehälters montiert sind. Zur Kompensation variierender Gravitationsfernfelder, deren Ursprung nicht in Füllstandänderungen liegt, werden zur Signalweiterverarbeitung die Feldstärkemesswerte der 2 oder mehr Gravimetereinheiten voneinander subtrahiert. Die Felddifferenzwertbildung ist dabei richtungsselektiv auszuführen, das heißt, es sind Feldkomponenten mit jeweils gleicher Orientierung bezüglich der x-, y- oder z-Raumachse voneinander zu subtrahieren.

Aus den Felddifferenzwerten wird je nach Anzahl der Gravimetereinheiten und deren Positionen am Füllgutbehälter, der Füllstandwert nach verschiedenen, im späteren dargestellten, Verfahren ermittelt. Zur Gravitationsfeldmessung wird ein neuartiges Miniaturgravimeter eingesetzt. Ein Ausführungsbeispiel davon ist in Fig. 1 gezeigt.

Die Unterscheidung zwischen dem Gravitationsfeld, das von dem zu detektierenden Füllgut ausgeht, und den übrigen Gravitationsfeldern, die von Massen stammen die nicht gemessen werden sollen, geschieht besonders vorteilhaft dadurch, dass die Gradientenwerte des Gravitationsfeldes im Bereich des zu messenden Füllgutes ermittelt werden, und aus deren räumlichen Verlauf die Masseverteilung in der näheren Umgebung bestimmt wird.

Da das Gravitationsfeld eines jeden Körpers, außerhalb von diesem, mit dem Kehrwert des Abstandsquadrates zu seinem Schwerpunkt abnimmt, herrscht in seiner näheren Umgebung eine deutlich größere prozentuale Feldstärkenabnahme pro Längeneinheit, als dies in weiterer Entfernung der Fall ist.

Die Gravitationsfelder unterschiedlich weit entfernter Körper, besitzen somit einen individuellen räumlichen Gradientenänderungswert, und können daher anhand von diesem unterschieden werden.

Eine in der Nähe befindliche kleine Masse mit sehr schwachem Eigengravitationsfeld, kann somit aufgrund ihres großen Feldgradientenänderungswertes, trotz des dominierenden starken Erdfeldes, dessen Gradientenänderungswert jedoch um viele Zehnerpotenzen geringer ist, messtechnisch erfasst werden.

Zu diesem Zweck wird die Gravitationsfeldstärke in der Nähe der zu detektierenden Masse an verschiedenen Punkten im Raum gemessen. Da die Abstände zwischen den Gravitationsmesspunkten und der zu detektierenden Masse bekannt sind, kann anhand der auftretenden Feldgradientenwerte, jener Anteil an der gemessenen Summenfeldstärke ermittelt werden, der auf die Beobachtungsposition für die unbekannte Masse entfällt.

Für viele Anwendungen in der Praxis genügt es, wenn sich die Gravitationsmesspunkte auf einer geraden Linie befinden, die auf die zu detektierende Masse zeigt.

Bei einem derartigen Gravitationsfeldsensor registrieren die einzelnen Gravimetermesszellen in Abhängigkeit ihres Abstandes zum Zielobjekt, eine unterschiedlich geschwächte Objektfeldstärke. Die Schwächung ist dabei aufgrund des im Nahbereich des Messobjektes hohen Feldgradientenänderungswertes deutlich nichtlinear.

Weiter entfernte Objekte hingegen erzeugen, je nach räumlicher Sensorausrichtung, entweder lauter gleiche Feldstärken in den Messzellen, oder aufgrund ihrer im Fernbereich niederen Feldgradientenänderungswerte, eine nahezu lineare Feldabnahme entlang der Messzellen. Durch entsprechende mathematische Verarbeitung der Zellenmesswerte kann die Sensorelektronik die Fernfelder herausrechnen.

Gravitationsfelder unterliegen im Gegensatz zu elektromagnetischen und akustischen Wellen nicht den physikalischen Erscheinungen der Absorption, Reflexion, Dispersion, Interferenz, Beugung und Brechung.

Durchleuchtet man eine menschliche Hand mit einer Lichtquelle, so gestattet das wieder austretende Licht es nicht die Knochenstruktur zu erkennen. Selbst bei Anwendung höchstentwickelter optischer Sensoren und komplexester Datenverarbeitungsalgorithmen, ist es nicht möglich ein Knochenabbild auf diese Weise zu erzeugen. Der Grund liegt darin, dass die vorangehend erwähnten physikalischen Effekte den Informationsgehalt des Lichtes zerstört haben.

Da beim Durchgang eines Gravitationsfeldes durch eine Materieschicht keiner dieser Effekte eine Wirkung besitzt, wird der Informationsgehalt des durchtretenden Feldes in keinster Weise verändert. Dies bedeutet, dass das Gravitationsfeld eines hinter einer dicken Bleiplatte aufgestellten Glas Wasser, die Platte völlig unverändert durchtritt, und es daher keinen Unterschied macht, ob sie vorhanden ist oder nicht. Die Bleiplatte fügt nur zu den im Raum bereits vorhandenen Gravitationsfeldern ihr eigenes hinzu.

Da jedes der Felder seinen eigenen Ursprung im Raum hat, ist durch Auswertung der räumlichen Feldverteilung eine Trennung möglich.

Es hängt daher lediglich von der Genauigkeit und Auflösung der zur Verfügung stehenden Gravitationssensortechnologie ab, ob es möglich ist durch die Bleiplatte hindurch zu erkennen, wie voll das Glas ist, oder gar welche Form es hat.

Im Folgenden wird als Erstes die erfindungsgemäße Messung von Füllstand-Grenzwerten durch Auswertung des Füllguteigengravitationsfeldes beschrieben.

Grenzstandsensoren sollen das Erreichen eines bestimmten Füllstandniveaus melden. Zu diesem Zweck wird der Sensor außen an der Behälterwand auf der Höhe des zu meldenden Niveauwertes angebracht. Seine Aufgabe ist es ein räumlich begrenztes Volumen auf das Vorhandensein von Füllgutmasse hin zu überwachen. Massen, die sich außerhalb des Behälters befinden, dürfen nicht angezeigt werden.

Ein Füllstandgrenzschalter beinhaltet beispielsweise drei Gravimeterschaltkreise, mit denen die Gravitationsfeldstärke an drei verschiedenen Punkten gemessen wird. Die Punkte liegen vorzugsweise auf einer Geraden die auf den zu messenden Niveauwert zeigt. Aus den drei gewonnenen Messwerten können mittels Differenzbildung zwei benachbarte Feldgradientenwerte bestimmt werden.

Während die Feldstärke proportional mit dem Füllgutdurchmesser wächst, ist der Feldgradient an der Füllgutoberfläche unabhängig vom Durchmesser des Füllgutvolumens. Sowohl die Feldstärke wie auch der Gradient sind beide proportional zur Füllgutdichte. Mit zunehmender Entfernung von der Füllgutoberfläche nehmen Feldstärke und Feldgradient ab. Der Grad der entfernungsbedingten Abnahme beider Parameter ist abhängig vom Füllgutdurchmesser und damit der Behältergröße.

Bei der Festlegung des Montageabstandes der drei Gravimeter innerhalb des Füllstandsensors ist daher der Bereich der abzudeckenden Behälterdurchmesser zu berücksichtigen. Wird der Abstand zu groß gewählt, so kann der Sensor durch kleine Behälter hindurchblicken, so dass dahinter befindliche Massen detektiert werden. Wird er zu eng gewählt, so ergeben große Behälter nur geringe Signalunterschiede zwischen den Gravimetern.

Da sich die Gravimeter gegenseitig nicht beeinflussen, kann zur Einsatzbereichserweiterung zusätzlich ein viertes Gravimeter mit größerem Abstand im Sensor vorgesehen werden.

Figur 6 zeigt schematisch einen Gravitations-Füllstandgrenzschalter der horizontal seitlich an einem Füllgutbehälter montiert ist.

Die im Sensorgehäuse befindlichen Gravimeterschaltkreise sind mit G1,G2,G3 bezeichnet. Die Abstände $a_2$, $a_3$ der Gravimeter zueinander betragen beispielsweise jeweils 20 mm. Der Abstand $a_1$ zwischen dem ersten Gravimeter G1 und dem Füllgutbehälter beträgt beispielsweise 10 mm und der Abstand $a_4$ zur Sensorgehäuserückwand beträgt beispielsweise 80 mm. Die Masse des Füllgutbehälters m(B) beträgt z.B. 1 kg, bei einem Durchmesser von 0,124 m, die Massen der Störelemente $S_1$ und $S_2$ betragen z.B. jeweils 100 kg, bei einem Durchmesser von jeweils 0,58 m. Natürlich können auch ganz andere Abstände, Dichten und Massen gewählt werden.

Die Sensorsignalverarbeitung erkennt das Vorhandensein eines Füllgutes zum einen daran, dass der Feldgradient zwischen den beiden dem Füllgut nächsten Gravimetern eine gewisse Höhe besitzt, was ein Zeichen dafür ist, dass eine ausreichende Massendichte vorliegt, zum anderen daran, dass der dem Füllgut entferntere Feldgradient in bestimmter Weise niedriger als der erste Gradient ist, was ein Zeichen dafür ist, dass sich die detektierte Masse in der unmittelbaren Nähe und richtigen Richtung befindet.

Zur Elimination schwankender Fernfelder bildet die Sensorsignalverarbeitung als erstes die Differenzwerte (G1 - G2) und (G2 - G3) der in Richtung der Messgeraden liegenden Feldstärken. Diese Werte sind dem Feldgradienten im entsprechenden Streckenintervall proportional.

Anschließend werden anhand der Höhe des ersten Differenzwertes, von der Signalverarbeitung zwei zulässige Wertebereiche für den zweiten Differenzwert ermittelt. Liegt der zweite Differenzwert im ersten Wertebereich, so gibt der Sensor eine Leermeldung aus. Liegt der Wert im zweiten Wertebereich erfolgt die Ausgabe einer Vollmeldung. Ist der zweite Differenzwert in keinem der beiden zugeordneten Wertebereiche enthalten, so liegt eine Betriebsstörung vor, und der Sensor gibt Störmeldung aus.

Soll der Sensor mit einer Schalthysterese ausgestattet werden, kann dies durch Verwendung unterschiedlicher Wertebereiche für den leer/voll und voll/leer Wechsel geschehen.

Bei Sensoren, die als Maximumniveau- bzw. Minimumniveau-Sicherheitsgrenzschalter eingesetzt werden, kann es sinnvoll sein, jeder dieser beiden Betriebsarten eigene Wertebereiche zuzuordnen, um dem für die jeweilige Betriebsart sicheren Sensorausgangswert einen Signalausgabevorzug zu geben.

Mittels im Sensor abgelegter mathematischer Funktionen, welche den ersten Differenzwert als Eingangsgröße haben, kann die Sensorelektronik die Grenzen der Zuordnungsbereiche des zweiten Differenzwertes zu den Ausgangszuständen Leer/Voll/Störung errechnen.

Es ist auch möglich statt mathematischer Funktionen, eine Wertetabelle im Sensor abzulegen, aus der die Sensorsignalverarbeitung anhand des ersten Differenzwertes die entsprechenden Bereichszuordnungsgrenzen für den zweiten Differenzwert auslesen kann. Zur Begrenzung der Wertetabellengröße wird eine sinnvolle Anzahl von Eingangswerten verwendet, und bei dazwischenliegenden Werten nach bekannten Methoden interpoliert.

Es besteht auch die Möglichkeit, die erforderliche Mindesthöhe des ersten Differenzwertes und die Bereichszuordnungsgrenzen für den zweiten Differenzwert, zusätzlich anhand von eingegebenen Messanwendungseigenschaften wie Behälterdurchmesser oder Produktdichte an die aktuelle Messaufgabe anzupassen.

Ebenso ist es möglich, bei befülltem Behälter einen Vollabgleich auszuführen um die Signalauswerteparameter an die konkret auftretenden Felddifferenzwerte zu adaptieren.

Anhand der in Figur 6 dargestellten Messanordnung wird nachfolgend der Einfluss beweglicher externer Massen und ihre Entfernung aus dem Messergebnis gezeigt.

Der im Beispiel verwendete Füllgutbehälter ist sehr klein und beinhaltet gefüllt lediglich eine Füllgutmenge von 1Kg Gewicht. Aufgabe des seitlich montierten Sensors ist es, das Vorhandensein diese Menge, unbeeinflusst von variablen umgebenden Massen, sicher anzuzeigen.

Zur Veranschaulichung des Einfluss beweglicher Massekörper, sind in der Figur 6 die Störmassen $S_1$ und $S_2$ eingezeichnet. Es handelt sich dabei exemplarisch um zwei stark übergewichtige Personen, mit einem kugelförmigen Bauch von jeweils 100 Kg Gewicht.

Beide Personen nehmen die für die Messanordnung jeweils kritischste Position ein, indem sich ihr Bauchschwerpunkt exakt auf der Messgeraden der drei Gravimeter G1, G2, G3 befindet. Die erste Person ( Störmasse $S_1$) steht zu diesem Zweck genau auf der Rückseite des Behälters, die zweite Person ( Störmasse $S_2$) berührt mit ihrem Körper direkt das Sensorgehäuse von hinten.

Die Dichte des Füllgutes und der Störmassen ist mit 1 g/ccm ( Wasser ) angenommen. Alle Massen haben aufgrund der einfacheren Berechenbarkeit ein kugelförmiges Volumen. Die Behälterwand verfügt über eine Dicke von 10 mm.

Tabelle 1

| Füllgut Masse [kg] | Störmasse 1 [kg] | Stör- masse 2 [kg] | G 1 [nm/s$^2$] | G 2 [nm/s$^2$] | G 3 [nm/s$^2$] | Diff. Wert $G_1$-$G_2$ [nm/s$^2$] | Diff Wert $G_2$-$G_3$ [nm/s$^2$] | Diff. Wert ($G_1$-$G_2$)-($G_2$-$G_3$) [nm/s$^2$] | Anzeige |
|---|---|---|---|---|---|---|---|---|---|
| - | 100 | - | 37.1 | 33.8 | 31.0 | 3.3 | 2.8 | 0.5 | Leer |
| - | - | 100 | -39.7 | - 43.9 | - 48.7 | 4.2 | 4.8 | - 0.6 | Leer |
| - | 100 | 100 | - 2.6 | -10.1 | - 17.7 | 7.5 | 7.6 | - 0.1 | Leer |
| 1 | - | - | 12.9 | 7.9 | 5.3 | 5.0 | 2.6 | 2.4 | Voll |
| 1 | 100 | - | 50.0 | 41.7 | 36.3 | 8.3 | 5.4 | 2.9 | Voll |
| 1 | - | 100 | - 26.8 | -36.0 | - 43.4 | 9.2 | 7.4 | 1.8 | Voll |
| 1 | 100 | 100 | 10,3 | -2.2 | - 12.4 | 12,5 | 10,2 | 2.3 | Voll |

Tabelle 1 zeigt anhand von 7 verschiedenen Massekombinationen die auftretenden Feldstärkewerte an den drei Gravimetern, sowie die daraus berechneten Differenzwerte. Die Feldstärken sind in Nanometer pro Quadratsekunde angegeben und gelten in Richtung der Messgeraden.

Die ersten 3 Zeilen der Tabelle zeigen die Feldwerte bei leerem Behälter und vorhandenen Störmassen. Die vierte Zeile zeigt die Feldwerte bei vollem Behälter ohne die Störmassen. Die letzten 3 Zeilen zeigen die Feldwerte bei vollem Behälter und Störmassen.

Man erkennt, dass im Falle der Störmassen ohne Füllgut, der erste Felddifferenzwert zwar eindeutig auf eine vorhandene Masse hinweist, der Unterschied zum zweiten Differenzwert jedoch nur minimal ist.

Dies bedeutet, dass die detektierte Masse sich außerhalb des zu beobachtenden Raumvolumens befindet und daher nicht angezeigt werden darf.

Im Falle der Störmassen mit Füllgut sieht man, dass sowohl der erste Differenzwert hoch, als auch der Unterschied zum zweiten Differenzwert groß genug für die gewünschte Vollmeldung ist.

Obwohl die Störmassen in dem Beispiel beide je 100 mal so groß wie die Füllgutmasse waren, konnte der Gravitationsfeldsensor den Füllstand korrekt anzeigen.

Die Werte von Tabelle 1 zeigen auch, dass bei Verwendung von lediglich 2 anstatt 3 Gravimetern, eine Unterscheidung zwischen dem Füllgut und den aufgeführten Störmassen nicht möglich wäre.

Bei besonders kritischen Anwendungen wie Füllgütern geringer Dichte, oder Messungen durch dicke Behälterisolationsschichten, kann zur Störmassenunterdrückung der Einsatz von 4 sensorinternen Gravimeterschaltkreisen erforderlich werden.

Da das beschriebene Messverfahren selektiv die Gravitationsfelder in Richtung der Messgeraden auswertet, gehen Störmassen deren Schwerpunkt räumlich nicht auf der Messgeraden liegt, nur vermindert oder gar nicht in die Messung ein.

Als Zweites wird nachfolgend die erfindungsgemäße Messung von kontinuierlichen Füllständen durch Auswertung des Füllguteigengravitationsfeldes beschrieben.

Die Messung kontinuierlicher Füllstandwerte kann mittels vier verschiedener Verfahren der Feldauswertung geschehen. Diese Verfahren können einzeln oder auch kombiniert in einem Sensor zur Anwendung kommen.

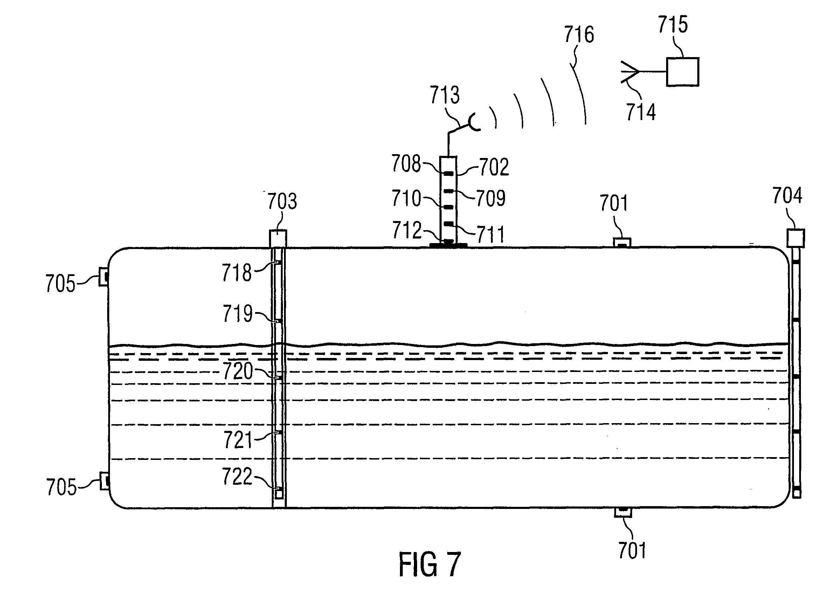

Fig. 7 zeigt eine schematische Querschnittsansicht eines teilgefüllten Füllgutbehälters, an dem fünf verschiedene Typen von kontinuierlich messenden Sensoren gemäß Ausführungsbeispielen der vorliegenden Erfindung montiert sind.

Das erste Verfahren basiert auf der Auswertung der Feldstärkendifferenz bei zwischen den Gravimetern sich befindendem Füllgut.

Zu diesem Zweck wird vorzugsweise ein erstes Gravimeter an der Unterseite des Füllgutbehälters angebracht und ein zweites an der Oberseite. Dieser Sensortyp ist in Figur 7 mit der Ziffer 701 bezeichnet.

Ist der Behälter leer entsteht eine Messwertdifferenz zwischen beiden Gravimetern, die dem Erdfeldgradienten multipliziert mit der Behälterhöhe entspricht. Dieser Wert wird mittels Nullabgleich aus dem Messergebnis entfernt.

Wird der Behälter befüllt, so wirkt das Füllgutgravitationsfeld am Ort des unteren Gravimeter dem Erdfeld entgegen, so dass dessen gemessene Feldstärke fällt. Am Ort des oberen Gravimeters addiert sich das Füllgutfeld zum Erdfeld, so dass dessen Feldstärke ansteigt.

Die gemessene Feldstärkendifferenz zwischen beiden Gravimetern ergibt nach geeigneter Messwertlinearisierung eine der Behälterfüllgutmasse proportionale Füllstandanzeige.

Es ist auch möglich, die beiden Gravimeter an zwei gegenüberliegenden Seitenwänden des Füllgutbehälters anzubringen. Bezüglich der genauen Erfassung des Leer- und Vollzustandes ist jedoch die voran erwähnte Montageart vorzuziehen.

Das Messergebnis ist von der Füllgutdichte abhängig.

Das zweite Verfahren basiert auf der Auswertung der Feldstärkenabnahme in zunehmendem Abstand zum Füllgut.

Das Gravitationsfeld außerhalb des Füllgutes nimmt, entsprechend dem Gravitationsfeldgesetz, mit dem Kehrwert des Abstandsquadrates zu seinem Masseschwerpunkt ab. Der Grad der entfernungsbedingten Feldstärkeänderung ist sowohl ein Maß für den Füllgutdurchmesser wie auch für die Entfernung zum Füllgut. Ein nach diesem Prinzip arbeitender Sensor enthält mehrere auf einer Linie montierte Gravimeterschaltkreise. Die Montagelinie zeigt vorzugsweise auf den Füllgutschwerpunkt. Dieser Sensortyp ist in Figur 7 mit Ziffer 702 bezeichnet.

Sensor 702 umfasst beispielsweise fünf Gravimetereinheiten 708, 709, 710, 711 und 712, welche vertikal übereinander angeordnet sind. Der Sensor kann sowohl auf wie auch unter den Behälter montiert werden. Weiterhin umfasst der Sensor eine Kommunikationsschnittstelle 713, die beispielsweise einen Sender aufweist. Über die Kommunikationsschnittstelle 713 können Datensätze, welche zum Beispiel auf Messdaten der Gravimetereinheiten 708, 709, 710, 711 und 712 basieren, an eine externe Auswerteeinheit 715 mit Empfänger 714 mittels Funkübertragung 716 gesendet werden. Natürlich ist es auch möglich, die Auswerteeinheit 715 in den Sensor zu integrieren, und dann beispielsweise ein Auswerteergebnis (z.B. Füllstandshöhe) über Schnittstelle 713 an eine Ausgabeeinheit oder an eine Einrichtung zur Weiterverarbeitung zu übertragen.

Die Sensorsignalverarbeitung errechnet mittels der gemessenen Feldwerte, und der bekannten physikalischen Gravitationsfeldverteilungsgesetze außerhalb von Massekörpern, den Abstand zum Füllgut bzw. dessen Höhe.

Werden insgesamt nur 2 Gravimeter verwendet, so stehen nur 2 unterschiedlich vom Füllgutschwerpunkt beabstandete Feldmesswerte zur Verfügung, aus deren Differenz sich lediglich ein Feldgradient berechnen lässt. Der daraus ableitbare Füllstandmesswert ist als Folge davon von der Füllgutdichte abhängig.

Vorzugsweise werden daher mindestens 3 Gravimeter verwendet, aus deren Feldmesswerten sich mindestens 2 ortsverschiedene Feldgradienten berechnen lassen. Aus diesen mindestens 2 Felgradientenwerten kann der Füllstand dichteunabhängig ermittelt werden. Die 3 in diesem Fall unbekannten Parameter Füllhöhe, Füllgutdichte und Fernfeld-damplitude, erfordern zur Lösung des Messproblems mindestens 3 Gravimeter, die 3 ortsverschiedene Feldmesswerte liefern.

Bei der Erstinbetriebnahme des Sensors ist bei leerem Füllgutbehälter ein Nullabgleich durchzuführen um statische Nahfeldkomponenten, wie die Leermasse des Behälters, aus dem Messergebnis zu entfernen.

Das dritte Verfahren basiert auf der Auswertung der Feldstärkenverteilung innerhalb des Füllguts oder entlang seiner Begrenzungsflächen. Das von einem kugelförmigen Füllgut erzeugte Feld nimmt, entsprechend dem Gravitationsfeldgesetz, vom Masseschwerpunkt zur Füllgutoberfläche linear zu, die Feldstärke ist dabei innerhalb des Füllgutes proportional dem Schwerpunktabstand. Bei nicht kugelförmigem Füllgut sind die Verhältnisse komplizierter, aber dennoch streng physikalisch gesetzmäßig.

Am Füllgutschwerpunkt ist dessen Eigenfeldstärke generell null. Der Sensor 703 beinhaltet mehrere auf einer Linie montierte Gravimeter 718, 719, 720, 721, 722 die sich in einem gemeinsamen Schutzrohr befinden. Der Sensor wird so montiert, dass er vorzugsweise in das Füllgut eintaucht, er kann aber auch senkrecht an der Behälterseitenwand angebracht werden. Geht bei einem eintauchenden Sensor 703 die Montagelinie der Gravimeter durch den Füllgutschwerpunkt, so ist dies besonders vorteilhaft, aber keineswegs Bedingung.

Die Sensorsignalverarbeitung errechnet anhand der Feldstärkedifferenzwerte zwischen den einzelnen Gravimetern, und der bekannten physikalischen Feldverteilungsgesetze innerhalb von Massekörpem, den Füllstandwert. Durch Ausführung eines Nullabgleich werden statische Nahfeldkomponenten kompensiert. Werden lediglich 2 Gravimeter verwendet, so ist das Füllstandmessergebnis abhängig von der Füllgutdichte. Stehen mindestens 3 ortsverschiedene Feldmesswerte zur Verfügung, so kann der Füllstand dichteunabhängig ermittelt werden.

Die je nach Füllstand gerade nicht eingetauchten Gravimeter des Sensors, können dazu verwendet werden den Füllstand zusätzlich nach Verfahren zwei zu ermitteln. Ebenso ist es vorteilhaft, den Wert des letzten eingetauchten Gravimeters mit dem des ersten nicht mehr eingetauchten Gravimeters nach Verfahren eins zu verrechnen. Durch Kombination der Ergebniswerte aller verwendeten Verfahren lässt sich die Messgenauigkeit des Sensors erhöhen.

Der Vorteil dieses Sensortyps gegenüber eintauchenden Füllstandstabsonden anderer physikalischer Messprinzipien liegt darin, dass der Sensor durch ein in den Behälter eingebautes Trennrohr, das ihn vor dem Füllgut schützt, hindurchmessen kann.

Für Transportbehälter sind dadurch einschiebbare Sensoren realisierbar. In den Behälter wird ein einseitig geschlossenes und nach außen hin offenes Trennrohr eingebaut. Während der Befüllung und zu sonstigen Kontrollzwecken wird der Gravitationssensor vorübergehend ein-geschoben und misst den Füllstand durch das Trennrohr hindurch. Der Behälter bleibt dabei hermetisch dicht. Im Beispiel von Figur 7 ist ein solches Trennrohr miteingezeichnet.

Das vierte Verfahren basiert auf der Auswertung der räumlichen Lage des Gravitationsfeldvektors. Ein derartiger Sensor ist in Figur 7 mit Ziffer 704 bezeichnet.

Liegen bei einem Sensor 704 montagebedingt die einzelnen Gravimeterpositionen nicht auf der Anstiegsgeraden des Füllgutschwerpunktes, so ändert der auf die Gravimeter einwirkende Gravitationsfeldvektor bei Füllstandänderungen nicht nur seine Länge, sondern auch seine Orientierung im Raum.

Der dreidimensionale Gravitationsfeldvektor wird gebildet durch die orthogonalen Feldkomponenten in x-, y- und z-Richtung. Das z-Feld weist in Füllhöhenrichtung und steht senkrecht zum Erdboden. Das x- und y-Feld verläuft hingegen parallel zum Erdboden. Es soll dabei das x-Feld die Gravitationskomponente in Richtung zur Behältermitte darstellen, und das y-Feld die Komponente parallel bzw. tangential zur Behälterwand am Montageort des Sensors repräsentieren.

Ist der Sensor 704 mittig an der Seitenwand eines symmetrischen Behälters montiert, so registrieren die Gravimeter bei Befüllung ein Feld in x- und z-Richtung. Eine y-Feldkomponente tritt nicht auf, da sich aufgrund der mittigen Sensormontage die einzelnen y-Felder am Sensorort gegenseitig aufheben. Bei nichtmittiger Montage erzeugt das Füllgut alle 3 Feldkomponenten an den Gravimeterpositionen. Die Amplitudenverhältnisse der orthogonalen Feldkomponenten an den Gravimetern bzw. die Winkelorientierung des resultierenden Gravitationsfeldvektors im Raum, ist für jeden einzelnen Füllstandwert charakteristisch und damit die Füllhöhe davon ableitbar. Da die Amplitudenverhältnisse ausgewertet werden, gehen die absoluten Amplitudenwerte nicht ins Messergebnis ein, so dass dieses füllgutdichteunabhängig ist.

Jedes Gravimeter im Sensor 704 bestimmt die Komponenten des Gravitationsfeldes in den drei Raumdimensionen. Die so gewonnenen Feldstärkenwerte werden durch Differenzwertebildung zwischen den Gravimetern von schwankenden Fernfeldern befreit. Ein Nullabgleich bei Inbetriebnahme des Sensors dient der Eliminierung des statische Umgebungsgravitationsfeldes. Aus den so gewonnenen Differenzfeldstärkewerten und den bekannten Positionen der Gravimeter, berechnet die Sensorsignalverarbeitung die Position des Füllgutes und damit den Füllstandwert. Auch dieses vierte Verfahren ist, je nach Aufbau des Sensors 704, mit den anderen 3 Verfahren kombinierbar.

Der in Figur 7 mit Ziffer 705 bezeichnete Sensor, der aus zwei Gravimetereinheiten besteht, welcher an der Behälterseitenwand montiert wird, nutzt beispielsweise die Verfahren eins und vier.

Neben der Berechnung der Füllhöhe aus den Gravimetermesswerten durch Anwendung der bekannten physikalischen Feldverteilungsgesetze unter Berücksichtigung der Montagepositionen der Gravimeter und eventuell zusätzlich eingegebener Behälterdaten, besteht auch die Möglichkeit die Füllhöhe aus den aktuellen Gravimetermesswerten durch einen Vergleich mit zuvor abgespeicherten Gravimetermesswerten während einer Inbetriebnahmebefüllung zu bestimmen.

Der zu messende Behälter wird zu diesem Zweck, nach Montage des Sensors, schrittweise befüllt, und nach jedem Befüllschritt die vorliegende Füllhöhe dem Sensor mitgeteilt. Dieser speichert zu dem eingegebenen Füllstandwert die auftretenden Gravitationsmesswerte aller Gravimeter ab. Beim späteren Messbetrieb vergleicht nun die Sensorsignalverarbeitung die aktuell gemessenen Gravitationswerte mit den abgespeicherten Stützwerten und interpoliert den Füllstand zwischen den beiden am nächsten liegenden Speicherwerten.

Bei den Verfahren 2 bis 4 werden vorzugsweise nicht die Absolutgrößen der Felddifferenzmesswerte miteinander verglichen, sondern die Verhältniswerte der einzelnen Felddifferenzen zueinander. Auf diese Weise werden auch Füllgüter, mit einer zur Inbetriebnahmebefüllung abweichenden Mediumsdichte, genau gemessen.

Durch die Anwendung mehrerer der Verfahren 1 bis 4 in einem Sensor, kann der Füllstand nach verschiedenen Methoden mehrfach bestimmt werden. Die Mittelwertbildung der einzelnen Messergebnisse führt zu einer erhöhten Messgenauigkeit des Sensors.

Bei Auftreten einer Störmasse reagieren die einzelnen Verfahren, je nach Position der Masse, unterschiedlich empfindlich auf diese. Die Mittelwertbildung mehrer Verfahren erhöht daher zusätzlich die Unempfindlichkeit gegenüber Störmassen.

Es ist auch möglich nach Durchführung einer Plausibilitätsprüfung der einzelnen Messergebnisse, ein als ungenau erkanntes Resultat von der Ergebnismittelwertbildung auszuschließen.

Durch Verwendung von mehr Gravimetern und damit Feldstärkemesspunkten in einem Sensor als theoretisch erforderlich, ist ebenfalls eine Überbestimmung des Füllstandes möglich. Auch bieten zusätzliche Gravimeter die Möglichkeit den Feldmesspunkteabstand zu reduzieren, so dass der Nahfeldmessbereich des Sensors sich verkleinert und eventuelle Störmassen eher als unproblematische Fernfelder wirken.

Die Wahl einer günstigen Montageposition des Sensors am Füllgutbehälter erhöht zusätzlich die Störsicherheit.

Neben diesen passiven Methoden den Einfluss von Störmassen auf das Messergebnis zu unterdrücken, besteht auch die Möglichkeit, die Störmasse gezielt zu ermitteln, und sie anschließend aus dem Endergebnis herauszurechnen. Voraussetzung für dieses Vorgehen ist eine hinreichend große Zahl von Feldmesswerten, und damit Eingangsgrößen, für den Korrekturalgorithmus.

Die Anzahl der benötigten Gravimeter in einem kontinuierlichen Füllstandsensor hängt auch von der Form des Behälters ab. Schlanke und unregelmäßig geformte Behälter können mehr Gravitationsmesspunkte und damit Gravimeter erfordern, als flache einfache Behälter.

Bei dem in Figur 7 mit Ziffer 704 bezeichneten Sensor sind die Gravimeter von einem gemeinsamen Metallrohr umgeben. Der Sensor ist daher nur zur Montage an gerade Behälterwände geeignet. Werden die Gravimeter in ein flexibles Band integriert, so kann der Sensor auch gekrümmten Behälterwänden folgen. Neben diesen vorkonfektionierter Sensoren, können auch einzelne Gravimetereinheiten in regelmäßigen Abständen an der Behälterwand angebracht, und per Zweileiterdatenbuskabel mit der Auswerteelektronik des Sensors verbunden werden. Die einzelnen Gravimeter werden vorzugsweise mittels Kabeldurchdringungstechnik an ein gummiartiges Flachbandkabel mit Rechteckquerschnitt angeschlossen. Das durchgehende Buskabel muss somit weder durchtrennt noch abisoliert werden.

Bei Sensoren die aus wenigen Gravimetereinheiten bestehen, wie der Typ 701 und der Typ 705 in Figur 7, kann auch ein vorhandener Feldbus zum Datenaustausch verwendet werden. Alle Einheiten werden über den Feldbus miteinander verbunden. Die Slave-Einheiten geben ihre gemessenen Gravitationswerte direkt auf den Bus, die Master-Einheit liest sie vom Bus wieder herunter, verrechnet sie mit den eigenen Gravitationsmesswerten zum Füllstandwert, und gibt diesen auf den Bus aus.

Auf Basis des später beschriebenen Miniaturgravimeterschaltkreis und modernen Funkübertragungsverfahren ist auch die Entwicklung und Anwendung drahtlos sendender Gravimetereinheiten möglich.

Diese Geräte bestehen beispielsweise aus dem Gravimeterschaltkreis, einer hochintegrierten Funkschnittstelle und einer langlebigen Lithiumbatterie als Stromversorgung. Das Volumen dieser Einheit hat die Größe einer Streichholzschachtel oder noch kleiner. Die Gravimetereinheiten werden in der benötigten Anzahl an den entsprechenden Stellen am Behälter angeklebt. Eine entfernt montierte Auswerteeinheit empfängt die Messdaten aller Gravimeter und verrechnet sie zum Füllstandwert. Es genügt dabei eine Auswerteeinheit um die Daten von einer Vielzahl von Behältern zu empfangen und deren Füllstände zu berechnen.

Eine noch weitergehende Miniaturisierung ist mittels Technologien möglich, wie sie bei intelligenten Kreditkarten und Warenetiketten eingesetzt werden. Damit könnten die Gravimetereinheiten als flacher, biegsamer Aufkleber gestaltet werden. In seinem Inneren befindet sich der Gravimeterchip, der Sendechip, eine Planarantenne, eine Lithiumpolymerbatterie und eventuell eine amorphe Solarzelle zur Batterieladung.

Die Fläche beträgt beispielsweise 1cm mal 4 cm, die Dicke circa 1 mm. Mit diesen sensorischen Aufklebern können dann Behälter und Rohrleitungen in revolutionär einfacher Weise instrumentiert werden. Eine zentrale Empfangseinheit berechnet dann alle Füllstandwerte und gibt sie an die Prozesssteuerung aus.

Ist es mittels spezieller Gravimeter möglich, in einer Gravimetereinheit mehrere Gravitationsfeldstärken an verschiedenen Orten zu messen bzw. direkt deren Differenzwert zu bestimmen, so sind die voran beschriebenen Gravitadonsfeldmesspunktanordnungen und die zugehörigen Gravitationsfeldausverteverfahren entsprechend sinngleich auf derartige Gravimetereinheiten übertragbar, ohne dass hierdurch der Erfindungsgegenstand verlassen wird.

Die Füllstandmessung auf Basis von Gravitationsfeldem bietet folgende Eigenschaften und Anwendungsvorteile:

Es können alle Flüssigkeiten und Flüssiggase gemessen werden. Schüttgüter müssen über eine Mindestdichte verfügen, die Körnung spielt keine Rolle. Die Messung kann durch die geschlossene Behälterwand hindurch erfolgen, es sind alle Wandmaterialien geeignet. Dies ist besonders vorteilhaft bei korrosiven, abrasiven, explosiven, keimfreien, giftigen, biogefährlichen, radioaktiven und ultrareinen Füllgütern, ebenso bei Hochdrucktanks. Sehr heiße und sehr kalte Füllgüter werden durch die Tankisolation hindurch gemessen. Da das Messverfahren auf Massemengen reagiert, werden Produktanhanmigen, Schmutzablagerungen und Schaum ignoriert. Es ist damit auch für besonders klebrige und zähe Füllgüter geeignet. Füllgüter die zu sehr starken elektrostatischen Aufladungen neigen, können an der Außenwand montierte Sensoren weder beschädigen noch mit Produkt zusetzen.

Die Anwendung in explosionsgeschützten Bereichen ist problemlos. Es wird keine Energie in das Füllgut eingekoppelt. Sensorstromversorgung und Messwertübertragung sind über eine eigensichere 4...20 mA Stromschleife möglich.

Behältereinbauten wie Rührflügel, Prallbleche, Schwallwände, Heiz- und Kühlschlangen, Wärmetauscherregister, gelochte Zwischenböden, Gasinjektorlanzen, Katalysatorträgerplatten

sowie Füllkörperschüttungen werden vom Gravitationsfeld unverändert durchdrungen, so dass dahinter und darunter befindliches Füllgut problemlos gemessen wird.

Neben der Montage an der Außenwand können Gravimetersensoren auch in die Behälterwand eingeschraubt oder aufgeflanscht werden. Bestimmte Sensorausführungen schließen in diesem Fall innen bündig mit der Wand ab, so das keine Einengung des Abzugsquerschnitts von Behältern oder des Durchflussquerschnitts von Rohrleitungen eintritt. Kleine Einschraubgewinde der Größe M8 sind möglich.

Sensoren die außen am Behälter montiert sind können ohne Unterbrechung des Anlagenbetriebs ausgetauscht oder nachgerüstet werden.

Es wird nun der Aufbau eines neuartigen erfindungsgemäßen Miniaturgravimeters beschrieben, wie es als beispielhafte Ausführungsformen in den Figuren 1 bis 5 dargestellt ist, und welches für den Einsatz in Industrieanlagensensoren besonders vorteilhaft geeignet ist.

Die Technik der klassischen präzisionsmechanischen Gravimeter, wie sie im Bereich der Geologie verwendet werden, ist für Anwendungen in der industriellen Messtechnik nicht nur viel zu teuer und in der Ansprechzeit zu träge, besonders störend ist auch das viel zu große Bauvolumen. Dieses verhindert nicht nur die Realisierung eines kompakten Sensors, sondern lässt auch die benötigte punktförmige Gravitationsfeldbestimmung in engen Abständen nicht zu.

Ein weiterer Nachteil der klassischen Gravimeter ist die Tatsache, dass sie das Gravitationsfeld in nur einer Raumrichtung zu messen vermögen. Für eine dreidimensionale Feldbestimmung sind somit 3 dieser Geräte erforderlich. Neben den immensen Kosten würde eine derartige Konfiguration auch nicht die Messung der 3 Feldkomponenten am selben Punkt im Raum gestatten.

Einen deutlichen Schritt in die richtige Richtung stellen integrierte mikromechanische Beschleunigungssensoren dar. Bei diesen Sensorelementen wird mittels Ätzverfahren aus einem Siliziumsubstrat eine Biegebalkenstruktur mit angeformtem Masseelement erzeugt. Durch kapazitive Abstandsmessung wird die Auslenkung des Biegebalkens erfasst und mittels elektrostatischem Kompensationskranfeld die Biegebalkennulllage wieder hergestellt. Aus der benötigten Kompensationsfeldstärke wird das Messergebnis gewonnen.

Der Nachteil dieser Sensorelemente ist, dass sie die für Gravitationsfeldmessungen benötigte Genauigkeit und Auflösung nicht erreichen.

Die Federkonstante der Biegebalkenstruktur kann nicht beliebig verringert werden, da ansonsten plastische Verformungen auftreten, die zu einem Verlust der Nullpunktstabilität führen. Zudem unterliegen komplexe mikromechanische Strukturen generell einer Vielzahl von Fehlereinflüssen. Ebenso ist von Nachteil, dass Mechanik und Elektronik auf dem selben Materialsubstrat erzeugt werden müssen, so dass beide Komponenten nicht optimal gefertigt werden können. Für eine dreidimensionale Feldmessung wären auch in diesem Fall drei orthogonal zueinander angebrachte Messelemente erforderlich.

Die Realisierung einer kostengünstigen, miniaturisierten und hochauflösenden Gravimetermesszelle erfolgt erfindungsgemäß dadurch, dass das gravitationsfelddetektierende Masseelement mittels elektrostatischer Kraftfelder berührungslos dreidimensional in der Schwebe gehalten wird. Die Notwendigkeit eines mechanischen Federelementes entfällt damit.

Die Position des Masseelementes wird kapazitiv ermittelt. Das schwebende Masseelement wird vorzugsweise direkt oberhalb eines integrierten Halbleiterschaltkreises angeordnet, so dass zumindest ein Teil der benötigten felderzeugenden und messenden Elektroden direkt auf diesem angebracht werden kann. Aus den zur Aufrechterhaltung einer definierten Schwebeposition des Masseelementes erforderlichen elektrischen Feldstärken, lassen sich die Werte der Gravitationsfeldstärken in den Raumrichtungen errechnen.

Die Figuren 1 und 2 zeigen ein erstes Ausführungsbeispiel einer derartigen Schwebekörpergravimeterzelle.

Fig. 1 zeigt einen Querschnitt durch eine beispielhafte Ausführungsform einer Gravimetereinheit gemäß der vorliegenden Erfindung.

Fig. 2 zeigt eine Draufsicht auf einen Halbleiterchip mit darauf aufgebrachten Elektroden der in Fig. 1 dargestellten Ausführungsform der erfindungsgemäßen Gravimetereinheit.

Auf einem Halbleiterchip 101, der die signalverarbeitende Elektronik beinhaltet, ist ein Formteil 102 befestigt, das über zwei konische Vertiefungen verfügt. Das Formteil 102 besteht aus nichtleitendem Isolationsmaterial wie beispielsweise Glas oder Keramik. In den beiden durch die Vertiefungen entstandenen Hohlräumen befindet sich jeweils ein konischer metallischer Körper 100, 200. Sein Durchmesser beträgt beispielsweise 0.5mm. Um auf ihn in allen drei Raumrichtungen elektrostatische Kräfte einwirken lassen zu können, sind im Inneren des Hohlraumes acht Elektroden, von jeweils der Form eines Viertelkreissegmentes, angebracht. Die eine Hälfte davon befindet sich auf dem Halbleiterchip 101 und bildet die Basiselektroden 113, 213, 1, 2, 3, 4, 201, 202, 203, 204, die andere Hälfte ist an der Innenseite der konischen Vertiefung auf das Formteil 102 aufmetallisiert und bildet die Seitenelektro-, den 115, 116, 215, 216. Die Seitenelektroden sind an der Formteilunterseite über die Kontaktflächen 117, 217 mit dem Chip 101 elektrisch kontaktiert. Bezugsziffern 118, 119, 120 bezeichnen Füllmaterial.

Figur 2 zeigt die Chipoberfläche mit den Basiselektroden und den Kontaktflächen 5, 6, 7, 8, 205, 206, 207, 208 zu den Seitenelektroden.

Der Spalt 108 zwischen Schwebekörper 100, 200 und Chip 101 bzw. Formteil 102, der in Fig. 1 zu erkennen ist, wirkt als Dielektrikum für das elektrische Feld. Das Dielektrikum 108 besteht entweder aus Vakuum, einem Inertgas wie z.B. Stickstoff oder einer nichtleitenden Flüssigkeit mit vorzugsweise hoher Dielektrizitätszahl. Die Verwendung einer Flüssigkeit bietet neben den um die Dielektrizitätszahl gesteigerten Werten der Kapazitäten und elektrischen Feldkräfte, auch den Vorteil der guten Dämpfung mechanischer Schwingungen durch viskositätsbedingte Flüssigkeitsreibung. Die Spaltbreite ist gering und beträgt beispielsweise 0.005 mm.

Durch Anlegen einer Spannung zwischen den Basiselektroden 113, 213, 1, 2, 3, 4, 201, 202, 203, 204 wird der Schwebekörper elektrostatisch nach unten gezogen. Eine Spannung zwischen den Seitenelektroden 115, 116, 215, 216, zieht ihn nach oben. Wird einseitig eine Spannung zwischen einer Basis- und Seitenelektrode angelegt, wird der Schwebekörper nach der entsprechenden Seite gezogen. Durch geeignete Elektrodenansteuerung lassen sich auch rotatorische Kippmomente erzeugen.

Zur Einkopplung der elektrostatischen Kräfte können sowohl Gleich- wie auch Wechselspannungen verwendet werden.

Die kapazitive Abstandsmessung zur Bestimmung der genauen Lage des Schwebekörpers, wird vorzugsweise über die selben Elektroden ausgeführt, die auch der Krafteinkopplung dienen. Dabei ist zu beachten, dass das Hochfrequenzmessfeld ebenfalls Anziehungskräfte erzeugt.

Die Mess- und Regelelektronik auf dem Halbleiterchip sorgt nun dafür, dass der Schwebekörper in einer exakten Symmetrieposition zu den Elektroden gehalten wird. Die von außen durch das Gravitationsfeld auf den Schwebekörper einwirkende Schwerkraft wird durch eine gegengerichtete elektrostatische Kompensationskraft aufgehoben. Die erforderliche Kompensationskraft in den drei Raumrichtungen ist somit ein Maß für das Gravitationsfeld in den drei Raumrichtungen.

Die verwendeten Ansteuerspannungen der einzelnen Elektrodensegmente werden vorzugsweise so gewählt, dass sich am Schwebekörper ein Mittelmassepotential einstellt. Zu diesem Zweck wird die eine Hälfte der Elektroden mit positivem Spannungspegel gegenüber Mittelmasse und die andere Hälfte mit entsprechend negativem Pegel zur Mittelmasse angesteuert.

Da der Schwebekörper die einwirkenden elektrostatischen Kräfte über die Zeit integriert, können neben analogen Ansteuerspannungen, auch digitale pulsweitenmodulierte Binär- oder Ternärlevelspannungen verwendet werden.

Im folgenden sind die physikalischen Berechnungsformeln für ein idealisiertes Schwebekegelgravimeter aufgeführt. Weiterhin wird anhand eines Berechnungsbeispieles gezeigt, welche Höhe die in der Praxis auftretenden Elektrodenansteuerspannungen zur Gravitationsfeldkompensation haben, sowie welche Elektrodenkapazitätswerte sich ergeben.

Auftriebskraft und wirksame Gewichtskraft des Schwebekörpers:

$$m = \rho_1 \cdot V \qquad V = \frac{\pi}{12} \cdot d^2 \cdot h \qquad m = \rho_1 \cdot \frac{\pi}{12} \cdot d^2 \cdot h$$

$$F_A = \rho_2 \cdot V \cdot g = \rho_2 \frac{\pi}{12} \cdot d^2 \cdot h \cdot g$$

$$F_G = (\rho_1 - \rho_2) \cdot V \cdot g = (\rho_1 - \rho_2) \cdot \frac{\pi}{12} \cdot d^2 \cdot h \cdot g$$

m = Kegelmasse
d = Kegeldurchmesser
h = Kegelhöhe
V = Kegelvolumen
$\rho_1$ = Kegeldichte
$\rho_2$ = Dielektrikumdichte
g = Gravitationsfeldstärke
$F_A$ = Auftriebskraft
$F_G$ = wirksame Gewichtskraft

Elektrostatische Kräfte $F_{EL}$ der einzelnen Elektroden:

$$F_{EL} = \frac{\varepsilon_o \cdot \varepsilon_r \cdot A \cdot U^2}{2s^2}$$

$\varepsilon_o$ = Elektrische Feldkonstante = $8.85 \cdot 10^{-12}$ F/m
$\varepsilon_r$ = Dielektrizitätszahl des Dielektrikums
A = wirksame Elektrodenfläche bezogen auf eine Raumrichtung x, y oder z.
U = Spannung zwischen Elektrode und Schwebekörper
s = Dielektrikumspaltweite

$$A_x = A_y = \frac{h \cdot l}{2} \qquad l = d \cdot \sin\frac{360^o}{2n}$$

$$A_x = A_y = \frac{h}{2} \cdot d \cdot \sin\frac{180°}{n}$$

Isolierflächen zwischen den Elektroden sind

$$A_z = \frac{\pi}{4} \cdot d^2 \cdot \frac{1}{n}$$

unberücksichtigt.

n = Anzahl der Basis - oder Seitenelektroden
l = Sehnenlänge der Seitenelektroden
x, y = Raumrichtung parallel zu den Basiselektroden
z = Raumrichtung senkrecht zu den Basiselektroden

$$F_{EL(x)} = F_{EL(y)} = \frac{\varepsilon_o \cdot \varepsilon_r \cdot h \cdot d \cdot U^2}{4s^2} \cdot \sin\frac{180°}{n}$$

Werte für 1 Elektrodensegment

$$F_{EL(Z)} = \frac{\varepsilon_o \cdot \varepsilon_r \cdot \pi \cdot d^2 \cdot U^2}{8n \cdot s^2}$$

Elektrodenansteuerspannung zur Kompensation der Gewichts- bzw. Gravitationskraft:

$$F_{EL} = F_G$$

$$\frac{\varepsilon_o \cdot \varepsilon_r \cdot h \cdot d \cdot U_x^2}{4s^2} \cdot \sin\frac{180°}{n} = (\rho_1 - \rho_2) \cdot \frac{\pi}{12} \cdot d^2 \cdot h \cdot g_x$$

$$U_x = s \cdot \sqrt{\frac{g_x \cdot (\rho_1 - \rho_2) \cdot \pi \cdot d}{3 \cdot \varepsilon_o \cdot \varepsilon_r \cdot \sin\frac{180°}{n}}}$$

gilt sinngleich für $U_y$ mit $g_y$

$U_x$ =    Ansteuerspannung einer Seitenelektrode um ein Gravitationsfeld in x-Richtung zu kompensieren

$$\frac{\varepsilon_o \cdot \varepsilon_r \cdot \pi \cdot d^2 \cdot U_z^2}{8s^2} = (\rho_1 - \rho_2) \cdot \frac{\pi}{12} \cdot d^2 \cdot h \cdot g_z$$

$$U_z = s \cdot \sqrt{\frac{2 \cdot g_z \cdot (\rho_1 - \rho_2) \cdot h}{3 \cdot \varepsilon_o \cdot \varepsilon_r}}$$

$U_z =$ Ansteuerspannung aller Basiselektroden oder aller Seitenelektroden um ein Gravitationsfeld in z-Richtung zu kompensieren.

Kapazitäten zwischen Elektroden und Schwebekörper:

$C_B$ = Kapazität einer Basiselektrode
$C_s$ = Kapazität einer Seitenelektrode
$A_S, A_B$ = Flächen der Elektroden

$$C = \frac{\varepsilon_o \cdot \varepsilon_r \cdot A}{s} \qquad A_B = \frac{\pi \cdot d^2}{4 \cdot n} \qquad A_s = \frac{\pi \cdot d}{2 \cdot n} \cdot \sqrt{\frac{d^2}{4} + h^2}$$

$$C_B = \frac{\varepsilon_o \cdot \varepsilon_r \cdot \pi \cdot d^2}{4 \cdot n \cdot s} \qquad C_s = \frac{\varepsilon_o \cdot \varepsilon_r \cdot \pi \cdot d}{2 \cdot n \cdot s} \cdot \sqrt{\frac{d^2}{4} + h^2}$$

Gravitationsfeldberechnung

$$g = \gamma \cdot \frac{m}{r^2} \qquad m = \rho \cdot V \qquad V = \frac{4}{3} \cdot \pi \cdot r^3 \qquad g = \gamma \cdot \rho \cdot \frac{4}{3} \cdot \pi \cdot r$$

g = Gravitationsfeld and der Oberfläche eines kugelförmigen Objektes
$\gamma$ = Gravitationskonstante = $6,67 \cdot 10^{-11} m3 / kg \cdot S^2$
m = Masse r = Kugelradius V = Volumen $\rho$ = Kugeldichte

Anwendungsbeispiel

Das Gravimeter ist seitlich an einem Kugeltank montiert. Die Kegelspitze zeigt nach unten. Das Füllgutfeld wirkt in x - Richtung. Das Erdfeld wirkt in z - Richtung. Das Füllgut ist Wasser.

Gegebene Werte:

| | |
|---|---|
| Füllgutdichte | $\rho = 1000 kg / m^3$ |
| Tankradius | r = 0,5 m |
| Kegeldurchmesser | d = 500 $\mu$m |
| Kegelhöhe | h = 250 $\mu$m |
| Kegeldichte | $\rho_1 = 2700 kg / m^3$ |
| Dielektrikumdichte | $\rho_2 = 700 kg / m^3$ |
| Spaltweite | s = 5 $\mu$m |
| Elektrodenanzahl | n = 4 |

(fortgesetzt)

| | |
|---|---|
| Dielektrizitätszahl | $\varepsilon_r = 20$ |
| Erdfeld | $g_E = 9{,}81\,\text{m/s}^2$ |

Berechnete Werte:

| | |
|---|---|
| Basiselektrodenkapazität | $C_B = 1{,}74$ pF |
| Seitenelektrodenkapazität | $C_S = 2{,}46$ pF |
| Füllgutgravitationsfeld | $g_F = 1{,}4 \cdot 10^{-7}\,\text{m/s}^2$ |
| Ansteuerspannung für die Basiselektroden | $U_Z = 680$ mV |
| Ansteuerspannung für die dem Füllgut abgewandte Seitenelektrode | $U_X = 171\,\mu\text{V}$ |

Wie das Berechnungsbeispiel zeigt, genügen zur Erzeugung der elektrostatischen Kompensationskräfte Spannungen von geringem Wert, so dass ein Betrieb der Messzellenelektronik an einer üblichen 5 Volt Versorgungsspannung problemlos möglich ist.

Da das Schwebekörpergravimeter prinzipbedingt kein mechanisches Federbauteil enthält, entfallen nicht nur die Fehlerkomponenten die eine derartige Struktur mit sich bringt, sondern man ist bezüglich der Messwertauflösung auch nicht mehr durch die Federsteifigkeit eingeschränkt.

Die Bauteile der Gravimeterzelle werden beim Messvorgang vorteilhafterweise keiner Verformung ausgesetzt, sondern rein statisch betrieben. Änderungen von Bauteiledimensionen durch Kriechvorgänge oder parameterverändernde Werkstoffumkristallisationsprozesse durch mechanische Zug- oder Druckspannungen treten daher nicht auf.

Aufgrund der Tatsache, dass auf dem Halbleiterchip keine mechanischen Strukturen erzeugt werden müssen, kann dessen Herstellungsprozess ganz auf die Optimierung der elektronischen Schaltungskomponenten ausgelegt werden.

Wird als Dielektrikum eine Flüssigkeit verwendet, so ist deren thermische Ausdehnung zu berücksichtigen. Innerhalb des Formteils kann beispielsweise eine teilweise gasgefüllte Kapillarröhre vorgesehen werden, in die sich die Dielektrikumsflüssigkeit hinein ausdehnen kann. Aufgrund der Oberflächenspannung der Flüssigkeit wird wie beim Flüssigkeitsthermometer ein Wandern der Gassäule aus der Kapillare verhindert.

Bei einem gasförmigen Dielektrikum ist der Schwebekörperhohlraum vorzugsweise hermetisch dicht auszuführen, so dass bei einer Temperaturänderung das eingenommene Volumen des Gases konstant bleibt, und damit auch dessen Dichte.

Da an die Gravimetermesszelle höchste Anforderungen hinsichtlich der Messgenauigkeit gestellt werden, kommen diverse Fehlerkompensationsmechanismen zum Einsatz. Es gilt vor allem temperatur- und alterungsbedingte Wertänderungen mechanischer und elektrischer Art zu kompensieren.

Zur Erzeugung zweier mathematisch unterschiedlich vom Gravitationsfeld und den Fehlerkomponenten abhängiger Messwerte, können auf dem Chip zwei in allen Abmessungen identische Schwebekörpereinheiten aufgebracht sein. Ebenso können die zugehörigen Ansteuer-und Auswerteschaltungsteile identisch aufgebaut sein.

Ein Unterschied zwischen beiden Anordnungen besteht dann darin, dass die Schwebekörper 100, 200 (siehe Fig 5) aus zwei unterschiedlichen Metallen mit verschiedener Dichte bestehen. Damit wird erreicht, dass in die Messergebnisse der beiden Schwebekörpereinheiten das Gravitationsfeld mit zwei unterschiedlichen Faktoren eingeht. Da beide Faktoren bekannt sind, kann durch Verrechnung beider Messwerte eine Fehlerkompensation durchgeführt werden.

Bei Verwendung eines flüssigen Dielektrikums, kann der durch dessen thermische Ausdehnung erzeugte Auftriebsfehler, auf diese Weise kompensiert werden.

Ein Vergleich der Kapazitätswerte der acht Elektrodensegmente innerhalb einer Schwebekörpereinheit liefert zusätzliche Korrekturwerte.

Während eine Positionsänderung des Schwebekörpers bei einem Teil der Elektroden eine Kapazitätszunahme, und bei einem anderen Teil eine Abnahme ergibt, führen thermische Werkstoffausdehnungen zu gleichartigen Änderungen. Durch geeignete Verrechnung der Elektrodensegmentwerte untereinander, lassen sich diese Fehler kompensieren. Mit Hilfe einer weiteren Hohlraumanordnung, die keinen Schwebekörper beinhaltet, ist es auch möglich die Grundkapazitätswerte separat zu messen.

Durch Erzeugung von Prüfkräften können weitere Informationen über die Funktionsparameter der Messzelle gewonnen werden. Zu diesem Zweck wird über die vorhandenen Elektroden ein zusätzliches elektrostatisches Kraftfeld in den Schwebekörper eingekoppelt. Die Feldregelung in der Elektronik wird dadurch veranlasst das bestehende Kompensationsfeld in seiner Stärke anzupassen, um das Kräftegleichgewicht im Schwebekörper aufrecht zu erhalten. Die Kraftfelderzeugung kann mit dieser Methode in ihrer Kennlinie durchgemessen werden.

Durch Veränderung der Schwebekörperposition aus der Mitte heraus, infolge anderer Sollwertvorgabe für die Regelung, lässt sich anhand der sich ergebenden Elektrodenkapazitätswerte bei verschiedenen Abständen zwischen dem Schwebekörper und den einzelnen Elektroden, die Kapazitäts-Abstands-Kennlinie des Messzelle nachmessen.

Mit diesen Verfahren kann die Zelle in allen drei Dimensionen automatisch vermessen und neu kalibriert werden.

Eine weitere Fehlerkorrekturmöglichkeit stellt die direkte Temperaturkompensation dar. Auf dem Halbleiterchip wird ein Temperaturfühler mitintegriert und entsprechend vorgegebener Wertabhängigkeiten die Kompensation ausgeführt. Da die gesamte Messzelle selbst nur Chipgröße hat, tritt ein kompensationsverfälschendes Temperaturgefälle nicht auf.

Der im kompletten Sensor ausgeführte Verrechnungsvorgang der Messwerte der einzelnen Gravimeterschaltkreise, führt bei einem gleichartigen Restfehler der Zellen, zu einem weiteren Kompensationseffekt. Die Chips für die Messzellen eines Sensors sollten daher dem gleichen Fertigungswafer entnommen werden.

Falls trotz aller Korrekturmaßnahmen und dem vorteilhaft hohen Integrationsgrad der Messzelle, die erforderliche Messgenauigkeit nicht erreicht wird, kann durch Verwendung eines dritten Schwebekörpers mit drittem Dichtewert, ein weiterer Datensatz von Eingangsgrößen zur Genauigkeitssteigerung generiert werden.

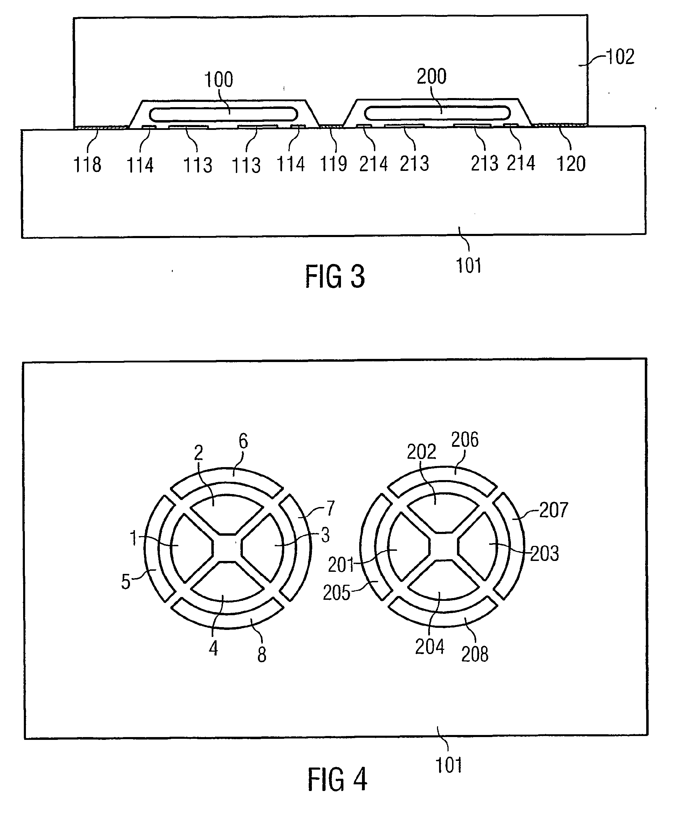

Ein zweites Ausführungsbeispiel einer Schwebekörpergravimeteranordnung ist in den Figuren 3 und 4 dargestellt.

Fig. 3 zeigt einen Querschnitt durch ein weiteres Ausführungsbeispiel einer Gravimetereinheit gemäß der vorliegenden Erfindung.

Fig. 4 zeigt eine Draufsicht auf einen Halbleiterchip mit darauf angebrachten Elektroden des in Fig. 3 dargestellten Ausführungsbeispiels der Gravimetereinheit.

Wird die Gravimeterzelle stets so montiert, dass das Erdgravitationsfeld von der Chipoberfläche wegzeigt, so kann die gesamte Elektrodenstruktur auf dem Chip 101 aufgebracht werden. Das Formteil 102 kommt dann ohne elektrische Anschlüsse aus. Mittels der Außenelektroden 114, 214 lassen sich seitlich auf den Schwebekörper 100, 200 einwirkende Kräfte erzeugen. Die dabei stets mitvorhandene Kraftkomponente zur Chipoberfläche wirkt montagebedingt dem Erdfeld entgegen.

Da die Außenelektroden nur geringe Kräfte erzeugen können, kann der Schwebekörper 100, 200 vorteilhaft als massearme flache Scheibe ausgeführt sein. Durch kombinierte Ansteuerung der Außenelektroden 114, 214 und Innenelektroden 113, 213 lassen sich alle benötigten Kraftkomponenten generieren.

Das Formteil 102 kann bei dieser Anordnung sowohl aus Isolierstoff wie auch aus Metall hergestellt werden. Bei Verwendung eines metallischen Formteils wird dieses mit dem Schaltungsmassepotential verbunden und wirkt dadurch gleichzeitig als elektrische Abschirmung für die Messsystem. Die Zellenausrichtung zur Erdoberfläche kann um circa +/- 45 Grad in beiden Raumrichtungen abweichen.

Neben den beschriebenen elektrostatischen Anziehungskräften ist auch die Erzeugung von abstoßenden Kräften möglich. Der Schwebekörper 100, 200 muss zu diesem Zweck aus einem nichtleitenden Material, wie Glas oder Keramik, bestehen. Dessen Dielektrizitätskonstante muss kleiner sein als die der verwendeten Flüssigkeit. Ein zwischen zwei Elektroden aufgebautes elektrisches Feld wirkt dann abstoßend auf den Schwebekörper.

Die kombinierte Erzeugung beider Kraftarten ist möglich indem der nichtleitende Schwebekörper mit einer Teilmetallisierung versehen wird. Der Halbleiterchip wird dadurch in die Lage versetzt, mit den auf ihm befindlichen Elektroden den metallisierten Teil des Schwebekörpers anzuziehen und den nichtmetallisierten Teil abzustoßen. Es können somit Kräfte in alle Raumrichtungen erzeugt werden, so dass eine Zellenausrichtung nicht erforderlich ist.

Während bei Anwendung anziehender elektrostatischer Kräfte eine Regelung der Elektrodenspannung zwingend erforderlich ist, um den Schwebekörper stabil in der Schwebe zu halten, ist bei Verwendung abstoßender Kräfte eine Kraftfeldregelung nicht grundsätzlich erforderlich.

Eine Annäherung des Schwebekörpers an ein abstoßendes Kraftfeld, führt bei abnehmendem Abstand und damit steigender elektrischer Feldstärke, zu einer Zunahme der Feldkräfte. Der Schwebekörper nähert sich daher den Elektroden nur soweit an, bis sich Gravitationskräfte und elektrische Feldkräfte die Waage halten. Aus den sich einstellenden Abständen des Schwebekörpers zu den einzelnen Elektroden, kann dann der Wert des Gravitationsfeldes in den 3 Raumrichtungen errechnet werden. Die Anwendung einer aktiven Feldregelung bei abstoßenden Kraftfeldern, kann jedoch dennoch günstig sein, da eine konstante Schwebekörperposition Vorteile bei der Fehlerkompensation bietet.

Ein drittes Ausführungsbeispiel einer Schwebekörpergravimeteranordnung ist in Figur 5 dargestellt. Das Formteil 102 benötigt auch bei dieser Anordnung keine Elektrodenstruktur. Es ist möglich Kräfte beider Polaritäten in allen drei Dimensionen auf die Schwebekörper 100, 200 einzukoppeln.

Ein Unterschied zu der voranbeschriebenen Anordnung besteht darin, dass rein metallische Schwebekörper verwendet werden können. Das Formteil 102 ist zu diesem Zweck grundsätzlich leitend ausgeführt und mit Masse beschaltet. Durch besondere mechanische Formgebung erhält es die Funktion einer den Schwebekörper anziehenden Elektrode. Dies wird dadurch erreicht, dass die wirksame Elektrodenfläche durch Anbringung der Vertiefung 111, 211 auf eine ringförmige Randzone 112, 212 reduziert wird. Diese Randzone 112, 212 hat eine kleinere Fläche als die Summenfläche der Innenelektroden 113, 213 und Außenelektroden 114, 214 auf dem Chip. Werden die Chipelektroden 113, 114, 213, 214 mit einem identischen Spannungswert angesteuert, der von Masse verschieden ist, so ergibt sich eine höhere elektrische Feldliniendichte an den Ringelektroden 112, 212 als an den Chipelektroden 113, 114, 213, 214. Als Folge davon wird der Schwebekörper von der Ringelektrode angezogen. Soll der Schwebekörper von den Chipelektroden angezogen werden, so geschieht dies durch Verwendung unterschiedlicher Spannungspotentiale zwischen den einzelnen Chipelektroden.

Figur 5 zeigt auch eine alternative Ausführungsform für die Schwebekörper 100, 200. Zur Erhöhung der elektrostatisch erzeugbaren Seitenkräfte, verfügen die Schwebekörper 100, 200 jeweils über eine Vertiefung 115, 215 an ihrer Unterseite. Dadurch entsteht eine ringförmige Randzone 216 die den Chipelektroden 113, 114, 213, 214 gegenübersteht. Die Randzone 216 verfügt über eine zusätzliche Innenseitenfläche 219, die es den Innenelektroden 113, 213 gestattet, ebenfalls Seitenkräfte in den Schwebekörper einzukoppeln. Den Außenelektroden 114, 214 dient die Außenseitenfläche 218 der Einkopplung von Seitenkräften.

Es besteht auch die Möglichkeit auf der Schwebekörperunterseite mehrere konzentrische Ringstrukturen vorzusehen, die jeweils über einen eigenen zugeordneten Satz Innen- und Außenelektroden verfügen, um noch höhere Seitenkräfte erzeugen zu können.

Durch geeignete Ansteuerung mehrfach vorhandener Elektrodensegmente, kann die für die Kraftfelderzeugung elektrisch wirksame Elektrodenfläche zu Test- und Kontrollzwecken variiert werden.

Weiterhin besteht die Möglichkeit die Ringstrukturen in verschiedenen Höhen auszuführen, so dass jeder einzelne Ring über einen anderen Abstand zu den Elektroden auf der Chipoberfläche verfügt. Eine derartige Anordnung gestattet es die Schwebekörperposition unter Verwendung verschiedener Spaltweiten mehrfach zu bestimmen. Anhand der bekannten Ringhöhenwerte lassen sich die abstandsunterschiedlichen Abstandsmesswerte von vorhandenen Fehlerkomponenten befreien.

Dieses Verfahren hat gegenüber einer Variation des Lagesollwertes, zum Zweck der Messung der Kapazitäts-Abstand-Kennlinie, den Vorteil, dass der Schwebekörper nicht bewegt werden muss. Die den einzelnen Ringen zugeordneten Elektroden gestatten es zudem die elektrischen Feldkräfte variabel über verschiedene Spaltweiten einzukoppeln.

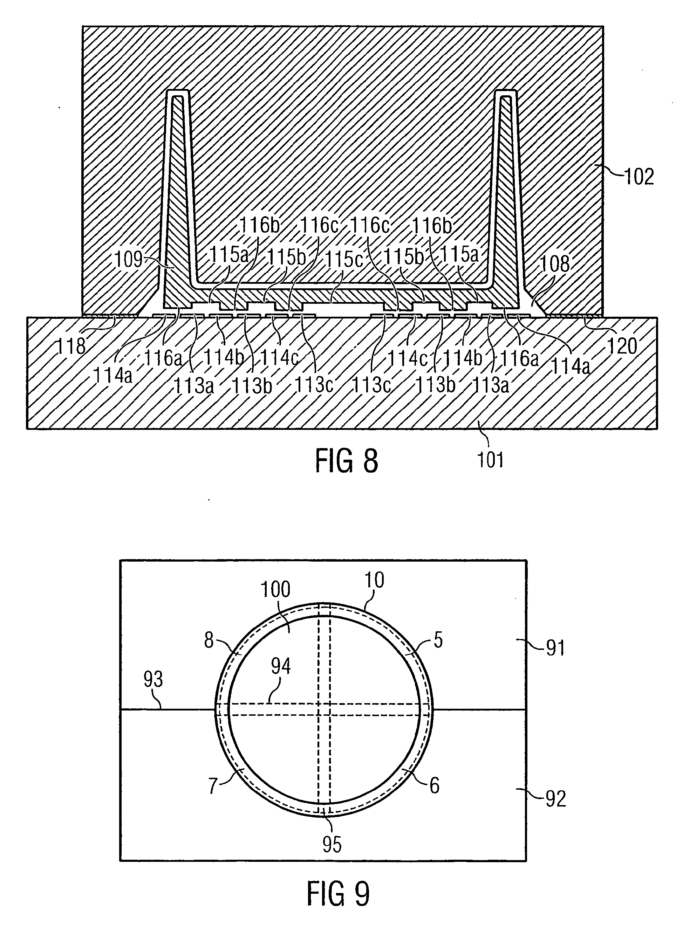

Figur 8 zeigt als viertes Ausführungsbeispiel ein Gravimeter mit einem spaltweitenstrukturierten Schwebekörper 109, der drei Ringeinheiten a, b, c aufweist. Die Ringeinheiten bestehen aus Ringstrukturen 116a, 116b, 116c und Vertiefungen 115a, 115b, 115c. Auf dem Halbleiterchip 101 sind ringförmige äußere Elektroden 114a, 114b, 114c und innere Elektroden 113a, 113b, 113c angebracht.

Bei Verwendung eines gasförmigen Dielektrikums mit konstant gehaltener Dichte besteht bei einem derartigen Aufbau die Möglichkeit, alle zur Fehlerkompensation erforderlichen Messwerte, von einem einzigen Schwebekörper abzuleiten. Die Gravimetermesszelle benötigt in diesem Fall, wie in Figur 8 dargestellt, insgesamt lediglich eine Schwebeanordnung.

Wird ein flüssiges Dielektrikum verwendet, so erfordert dessen thermische Ausdehnung, und der sich daraus ergebende Auftriebsfehler, im allgemeinen zwei Schwebeanordnungen zur Fehlerkompensation. Kann bei dem verwendeten Dielektrikum jedoch aus dessen Dielektrizitätszahl der Dichtewert berechnet werden, weil sich beispielsweise die elektrische Suszeptibilität des Dielektrikums proportional zum Dichtewert verhält, so ist auf diese Weise ebenfalls die Auftriebsfehlerkompensation ausführbar.

Die Ermittlung der Dielektrizitätszahl erfolgt durch Verrechnung der Kapazitätswerte einer ausreichenden Anzahl von Elektroden, so dass sich andere kapazitätsbestimmende Größen, wie beispielsweise Schwebekörperposition und Substratgrundkapazitäten, eliminieren lassen. Eine Anordnung wie in Figur 8 dargestellt, verfügt hierfür über eine ausreichende Anzahl von Elektroden.

Bei Verwendung eckiger statt runder Schwebekörper, sind die voran erwähnten Ringstrukturen entsprechend sinngleich durch polygonähnliche Strukturgeometrien zu ersetzen.

Elektrisch leitfähige Schwebekörper oder Formteile können neben Metall auch alternativ aus metallisiertem Isolierstoff, wie Glas oder Keramik, gefertigt werden. Die konturgenaue Herstellung metallischer Schwebekörper oder metallischer Formteile kann durch Prägeumformung geeigneter Rohlinge erfolgen. Teile auf Glasbasis können durch Pressen im plastischen Warmzustand präzise geformt werden.

Neben festen Schwebekörpern können prinzipiell auch Flüssigkeitskugeln verwendet werden. Das Dielektrikum kann entweder gasförmig sein, oder aus einer sich nicht mischenden zweiten Flüssigkeit bestehen. Ebenso ist die Verwendung einer elektrostatisch in Schwebe gehaltenen Gasblase in einer Flüssigkeit denkbar. Die bei kleinen Abmessungen stark ansteigende Oberflächenspannung sorgt für eine definierte Form dieser Schwebeobjekte.

Es besteht auch die Möglichkeit, den Schwebekörper ganz von einer, alle Elektroden tragenden, Formteilanordnung zu umgeben, und den Halbleiterchip oder sonstige Elektronik mit Leiterverbindungen anzukoppeln. Ebenso ist es möglich den Schwebekörper sandwich-artig zwischen zwei Halbleiterchips einzubetten. Weiterhin besteht die Möglichkeit die Vertiefungen für den Schwebekörper nicht im Formteil vorzusehen sondern auf dem Halbleiterchip selber.

Figur 9 zeigt diesbezüglich ein fünftes Ausführungsbeispiel eines Schwebekörpergravimeters, wobei der Einfachheit halber nur eine Schwebeanordnung dargestellt ist. Im Inneren zweier, an einer Trennlinie 93 aufeinandergefügter Formteile 91, 92, welche jeweils eine halbkugelförmige Vertiefung 10 aufweisen, befindet sich ein kugelförmiger Schwebekörper 100. Jedes der Formteile 91, 92 trägt in seiner Vertiefung 10 beispielsweise vier Elektroden von Viertelskugelkalottengestalt, um krafterzeugende sowie abstandsmessende elektrische Felder auf die Schwebekugel 100 einkoppeln zu können. Von den 4 Elektroden pro Formteil, sind in Fig. 9 nur jeweils zwei Elektroden 5, 8 beziehungsweise 6, 7 zu sehen. Bezugzeichen 94 bezeichnet eine Elektrodenausdehnungsgrenze. Bezugzeichen 95 bezeichnet einen Isolationszwischenraum.

Die Kugelgestalt des Schwebekörpers 100 ermöglicht eine vereinfachte Feldregelung, da aufgrund der Rotationssymmetrie des Kugelkörpers bezüglich aller drei Raumachsen, auf die Regelung aller drei rotatorischen Freiheitsgrade verzichtet werden kann, und daher nur die verbleibenden drei translatorischen Freiheitsgrade zu regeln sind.

Da beide Formteile 91, 92 im allgemeinen passiver Natur sind, und daher mittels streukapazitätsbehafteter Leiterverbindungen an eine externe Elektronik angeschlossen werden müssen, sind Schwebeanordnungen mit elektrodentragendem Halbleiterchip besonders vorteilhaft.

Im Schwebekörpergravimeter werden vorzugsweise elektrische Felder zur Krafterzeugung und Abstandsmessung eingesetzt. Diese lassen sich mit minimalem Energieaufwand generieren, einfach abschirmen und die benötigten Elektrodenanordnungen sind kostengünstig und sehr präzise herstellbar sowie integrationsfähig.

Alternativ können auch magnetische Felder verwendet werden. Der Schwebekörper wird hierzu von elektromagnetischen Spulen umgeben. Ein aus ferromagnetischem Material, wie Eisen oder Ferritkeramik, bestehender Schwebekörper wird vom Magnetfeld der Spulen angezogen. Körper aus permanentmagnetischen Material lassen sich je nach Feldpolung der Spulen sowohl anziehen wie auch abstoßen. Körper aus nichtmagnetischem, aber elektrisch leitfähigem, Material, wie beispielsweise Aluminium, können infolge von Wirbelstrombildung durch magnetische Wechselfelder der Spulen, von diesen abgestoßen werden.

Auch die Abstandsmessung kann mittels magnetischer Felder erfolgen. Aus den Induktivitätswerten der Spulen, sowie aus der magnetischen Koppelung zwischen den Spulen, kann der Abstand zu einem ferromagnetischen Schwebekörper ermittelt werden. Bei einem ohmisch leitfähigem Körper, kann die Abstandsmessung durch Auswertung der resistiven Komponente der Wechselstromimpedanz der Spulen erfolgen. Vom Schwebekörper ausgehende Felder, oder durch ihn veränderte Feldamplituden, stellen ebenfalls ein Maß für den Abstand dar. Die Feldstärkemessung kann beispielsweise mittels magnetoresistiven, Hall-oder GMR-Sensorelementen geschehen.

Bei Anwendung von magnetischen Verfahren ist eine ausreichende Abschirmung der Messzelle gegenüber Umgebungsmägnetfeldern vorzusehen.

Die Schwebekörperposition kann auch konduktiv bestimmt werden. Hierzu ist ein ohmisch leitfähiges Dielektrikum zu verwenden. Der dann auftretende Widerstandswert zwischen einzelnen konduktiven Messelektroden, stellt ein Maß für den Schwebekörperabstand zu den Elektroden dar. Wird ein nicht zu niederohmiges Dielektrikum verwendet, so ist eine gleichzeitige resistive und kapazitive Abstandsmessung durchführbar. Ebenso bleibt die Möglichkeit der elektrischen Kraftfelderzeugung erhalten.

Des Weiteren ist auch eine optische Abstandsmessung möglich. Diese kann beispielsweise durch Auswertung der Abschattungswirkung des Schwebekörpers auf einen Lichtstrahl, mittels Messung der Amplitude von vom Körper rückgestreuten Lichtes einer Punktlichtquelle sowie interferometrisch erfolgen.

Prinzipiell besteht auch die Möglichkeit auf mechanischem Wege, beispielsweise durch An-oder Umströmen des Schwebekörpers mittels eines Fluids, welches an Stelle des Dielektrikum tritt, oder dieses selber darstellen kann, Kräfte auf den Schwebekörper einzukoppeln, sowie aus dem spaltweitenabhängigen Strömungswiderstand der Anordnung, Rückschlüsse auf die Körperposition zu ziehen.

Zur Unterdrückung des störenden Einflusses von Umgebungsvibrationen auf das Gravimeterausgangssignal existieren verschiedene Möglichkeiten.

Es ist vorteilhaft, den Messzellenträgers in Dämmstoff einzubetten, bzw. mit anderen Maßnahmen die Schwingungsübertragung vom Sensorgehäuse zu den Messzellen zu hemmen.

Des weiteren kann bei Verwendung eines flüssigen Dielektrikums die strömungsbedingte Flüssigkeitsreibung zur Vibrationsunterdrückung ausgenützt werden.

Bei Messzellen mit gasförmigen Dielektrikum kann durch entsprechende Gestaltung von Schwebekörper und Formteil ebenfalls eine Vibrationsdämpfung durch das Dielektrikum bewirkt werden.

Der Schwebekörper wird hierzu so ausgeführt, dass er bei Bewegungen in jeder der drei Raumrichtungen, eine möglichst große Volumenverdrängung des Gasdielektrikum bewirkt, gleichzeitig jedoch nur ein minimales Eigengewicht aufweist.

Der Schwebekörper 100 kann zu diesem Zweck becherartig, hutartig oder halbgeschlossen zylindrisch aufgebaut sein wie in Figur 8 dargestellt, ebenso sind Ausführungen als ganz geschlossener Hohlkörper möglich. Das bei Bewegungen verdrängte Gasvolumen muss durch den engen Spalt zwischen Schwebekörper und Formteil zur gegenüberliegenden Seite abfließen, so dass nur langsame Bewegungen möglich sind.

Bei metallischen Schwebekörpern können alternativ auch Wirbelströme zur Vibrationsdämpfung eingesetzt werden. Hierzu wird auf dem Formteil ein Permanentmagnet angebracht, welcher den elektrisch leitfähigen Schwebekörper einem inhomogenen Magnetfeld aussetzt. Jede Bewegung des Schwebekörpers führt zur Bildung von Wirbelströmen, deren eigene Magnetfelder entsprechend dem Lenz'schen Gesetz der sie verursachenden Bewegung entgegen wirken.

Es besteht auch die Möglichkeit Vibrationskräfte in Echtzeit durch elektrostatische Kräfte der Elektroden zu kompensieren. Da mechanische Vibrationen üblicherweise im Frequenzbereich von 1 bis 1000 Hz auftreten, die Regelung der elektrostatischen Felder jedoch mit Frequenzen von mehreren 100 MHz erfolgen kann, sind die elektrischen Kompensationskräfte mehr als fünf Zehnerpotenzen schneller als die höchsten mechanischen Vibrationsfrequenzen.

Da Vibrationen eine reine Wechselgröße darstellen, das Gravitationsfeld hingegen eine Gleichfeldgröße ist, kann durch Schwingungsunterdrückung und Messwertintegration die gewünschte Trennung herbeigeführt werden.

Durch die umfangreichen Diagnosefunktionen im Rahmen der Fehlerkorrektur, stellt die Schwebekörpergravimeterzelle ein selbstüberwachtes Messsystem dar. Der Sensorbetreiber erhält bei Ausfall eine zuverlässige Störmeldung, ebenso ist bei Parameterverschlechterung ein Vorausfallsignal als Warnmeldung abgebbar.

Aufgrund der Winzigkeit der Messzellen, ist für besondere Sicherheitsanforderungen auch der Bau vollständig redundanter Sensoren möglich, ohne dass sich die Außenabmessungen vergrößern. Eine gegenseitige Beeinflussung der Messzellen oder kompletter Sensoren erfolgt prinzipbedingt nicht.

Durch Anordnung zahlreicher Messzellen in Form einer Matrix, ist auch die Realisierung bilderzeugender Sensoren denkbar.

Das erfindungsgemäße Schwebekörpergravimeter und die voran beschriebenen Gravitationsfeldausverteverfahren können neben der Verwendung in Füllstandsensoren auch für andere Anwendungen der qualitativen und quantitativen Detektion von Massen bzw. deren Volumen vorteilhaft eingesetzt werden. Es können mit nur einem Typ von Gravimeterschaltkreis, alle Arten von Messanwendungen abgedeckt werden, da das Erdgravitationsfeld in allen Fällen stets die dominierende Größe darstellt.

Des Weiteren ist die erfindungsgemäße Schwebekörpermesszelle neben der Erfassung von Gravitationsbeschleunigungen auch zur Messung von Beschleunigungen anderer Art einsetzbar. Gegenüber bekannten Beschleunigungssensoren, weist sie insbesondere bei der Messung sehr kleiner Beschleunigungswerte Vorteile auf Sie lässt sich daher beispielsweise in Trägheitsnavigationssystemen für Fahrzeuge, U-Boote und Flugkörper verschiedenster Art einsetzen.

Ergänzend ist darauf hinzuweisen, dass "umfassend" keine anderen Elemente oder- Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Gravimetereinheit zum Ermitteln einer Gravitationsfeldstärke, die Gravimetereinheit umfassend:

   einen ersten Schwebekörper;
   einen ersten Detektor;
   eine Quelle zur Erzeugung eines Feldes;
   wobei der erste Schwebekörper durch ein von der Quelle erzeugtes Feld berührungslos in der Schwebe haltbar ist;
   wobei eine erste Position des ersten Schwebekörpers durch den ersten Detektor detektierbar ist;
   wobei die Gravimetereinheit ausgeführt ist, erste Daten auf Basis der detektierten ersten Position oder dem erzeugten Feld zu ermitteln;
   wobei die ersten Daten mit einer ersten Gravitationsfeldstärke an einem ersten Ort korrespondieren;
   wobei das Feld ein elektrisches Feld ist;
   wobei die Quelle zumindest eine erste Elektrode umfasst, zur Erzeugung des elektrischen Feldes; und
   wobei der erste Detektor eine zweite Elektrode umfasst, zur Detektion der ersten Position des ersten Schwebekörpers.

2. Gravimetereinheit nach Anspruch 1,
   wobei der erste Detektor zur kapazitiven, induktiven, konduktiven oder optischen Detektion der ersten Position des ersten Schwebekörpers ausgeführt ist.

3. Gravimetereinheit nach Anspruch 1,
   wobei der Schwebekörper in einem mit einem Dielektrikum gefüllten Hohlraum angeordnet ist.

4.  Gravimetereinheit nach einem der Ansprüche 1 bis 3, weiterhin umfassend:

    einen zweiten Schwebekörper;
    einen zweiten Detektor;
    wobei eine zweite Position des zweiten Schwebekörpers durch den zweiten Detektor detektierbar ist; und
    wobei die Gravimetereinheit ausgeführt ist, die ersten Daten auf Basis der gemessenen ersten Position und der gemessenen zweiten Position zu erzeugen.

5.  Gravimetereinheit nach einem der Ansprüche 1 bis 4, weiterhin umfassend:

    eine Regelungseinrichtung;
    wobei die Regelungseinrichtung zum Halten des ersten Schwebekörpers in einer Ausgangsposition ausgeführt ist.

6.  Gravimetereinheit nach Anspruch 5,
    wobei die Regelungseinrichtung eine Stärke des von der Quelle erzeugten Feldes auf Basis der von dem ersten Detektor detektierten ersten Position des ersten Schwebekörpers regelt, so dass der erste Schwebekörper in der Ausgangsposition gehalten wird; und
    wobei die Gravimetereinheit ausgeführt ist, die ersten Daten auf Basis von einem Regelungsparameter der Regelungseinrichtung zu erzeugen.

7.  Gravimetereinheit nach einem der Ansprüche 1 bis 6, weiterhin umfassend:

    eine Speichereinrichtung;
    wobei die Speichereinrichtung zur Speicherung von Referenzwerten ausgeführt ist.

8.  Gravimetereinheit nach einem der Ansprüche 1 bis 7,
    wobei die Gravimetereinheit auf einem Halbleiterchip ausgebildet ist.

9.  Sensor zur Materialdetektion mittels einer Gravitationsfeldauswertung, der Sensor umfassend:

    eine erste Gravimetereinheit nach einem der Ansprüche 1 bis 8;
    eine zweite Gravimetereinheit nach einem der Ansprüche 1 bis 8;
    eine Kommunikationsschnittstelle;
    wobei die erste Gravimetereinheit zum Ermitteln erster Daten, welche mit einer ersten Gravitationsfeldstärke an einem ersten Ort korrespondieren, ausgerührt ist;
    wobei die zweite Gravimetereinheit zum Ermitteln zweiter Daten, welche mit einer zweiten Gravitationsfeldstärke an einem zweiten Ort korrespondieren, ausgeführt ist; und
    wobei die Kommunikationsschnittstelle zur Übertragung der ersten Daten und der zweiten Daten an eine Auswerteeinheit ausgeführt ist.

10. Sensor nach Anspruch 9,
    wobei die ermittelten ersten Daten auf erste Schwebekörperpositionsdaten oder auf erste Regelungsparameter einer ersten Regelungseinrichtung basieren; und
    wobei die ermittelten zweiten Daten auf zweite Schwebekörperpositionsdaten oder auf zweite Regelungsparameter einer zweiten Regelungseinrichtung basieren.

11. Sensor nach Anspruch 9 oder 10,
    wobei die erste und die zweite Gravimetereinheit relativ zueinander an festen Positionen im Sensor angeordnet sind.

12. Sensor nach einem der Ansprüche 9 bis 11,
    wobei die erste Gravimetereinheit um eine Achse rotierbar oder entlang einer gemeinsamen Achse verschiebbar angeordnet ist;
    wobei die erste Gravimetereinheit während einer Rotation oder Verschiebung zur Messung von einem ersten Volumendatensatz, welcher die ersten Daten umfasst, ausgeführt ist.

13. Sensor nach einem der Ansprüche 9 bis 12, weiterhin umfassend:
    wobei der Sensor neben der ersten und der zweiten Gravimetereinheit eine Mehrzahl an dritten Gravimetereinheiten umfasst, welche zusammen mit der ersten und der zweiten Gravimetereinheit ein ein-, zwei- oder dreidimensionales Array zur Messung eines Linien-, Flächen- oder Volumendatensatzes ausbilden.

14. Sensor nach einem der Ansprüche 9 bis 13, weiterhin umfassend:

eine Auswerteeinheit;
wobei die Auswerteeinheit zur Entgegennahme der ersten Daten und der zweiten Daten von der Kommunikationsschnittstelle ausgeführt ist; und
wobei die Auswerteeinheit zur Berechung eines Gradienten eines Gravitationsfeldes auf Basis der ersten Daten und der zweiten Daten ausgeführt ist.

15. Sensor nach Anspruch 14,
wobei die Auswerteeinheit zur Berechung einer örtlichen Massenverteilung in der Umgebung des Sensors ausgeführt ist.

16. Sensor nach Anspruch 14 oder 15,
wobei die Auswerteeinheit zur Berechung eines Füllstandes eines Behälters auf Basis der ersten Daten und der zweiten Daten ausgeführt ist.

17. Sensor nach einem der Ansprüche 9 bis 16,
wobei der Sensor auf einem Halbleiterchip ausgebildet ist.

18. Verfahren zur Füllstandsmessung eines Füllgutes in einem Behälter mittels einer Gravitationsfeldauswertung, das Verfahren umfassend die folgenden Schritte:

Erzeugen eines Feldes durch eine Quelle;
Detektieren einer ersten Position eines ersten Schwebekörpers der ersten Gravimetereinheit durch einen ersten Detektor;
Ermitteln von ersten Daten, welche mit einer ersten Gravitationsfeldstärke an einem ersten Ort korrespondieren, durch eine erste Gravimetereinheit;
Ermitteln von zweiten Daten, welche mit einer zweiten Gravitationsfeldstärke an einem zweiten Ort korrespondieren, durch eine zweite Gravimetereinheit;
Berechnen eines Füllstandes des Füllgutes auf Basis der ermittelten ersten und zweiten Daten;
wobei das Feld ein elektrisches Feld ist;
wobei der erste Schwebekörper durch das von der Quelle erzeugte elektrische Feld berührungslos in der Schwebe gehalten wird;
wobei die ersten Daten auf Basis der detektierten ersten Position oder dem erzeugten Feld ermittelt werden.
wobei die Quelle zumindest eine erste Elektrode umfasst, zur Erzeugung des elektrischen Feldes; und
wobei der erste Detektor eine zweite Elektrode umfasst, zur Detektion der ersten Position des ersten Schwebekörpers.

19. Verfahren nach Anspruch 18,
wobei das Feld ausgewählt ist aus der Gruppe bestehend aus elektrischem Feld, magnetischem Feld, elektromagnetischem Feld und mechanischem Strömungsfeld.

20. Verfahren nach einem der Ansprüche 18 bis 19,
wobei der erste Detektor zur kapazitiven, induktiven, konduktiven oder optischen Detektion der ersten Position des ersten Schwebekörpers ausgeführt ist.

21. Verfahren nach einem der Ansprüche 18 bis 20,
wobei die Berechnung des Füllstandes ein Berechnen eines Gradienten eines Gravitationsfeldes im Bereich des Füllgutes auf Basis der ersten Daten und der zweiten Daten umfasst.

22. Verfahren nach einem der Ansprüche 18 bis 21,
wobei die erste und die zweite Gravimetereinheit relativ zueinander an festen Positionen in einem Sensor angeordnet sind.

23. Verfahren nach einem der Ansprüche 18 bis 22, weiterhin umfassend den Schritt:

Rotieren der ersten Gravimetereinheit um eine Achse oder Verschieben der ersten Gravimetereinheit entlang einer Achse;

wobei die erste Gravimetereinheit während einer Rotation oder Verschiebung zur Messung von einem ersten Volumendatensatz, welcher die ersten Daten umfasst, ausgeführt ist.

24. Verfahren nach einem der Ansprüche 18 bis 23, weiterhin umfassend den Schritt:

Übertragung der ersten Daten und der zweiten Daten durch eine Kommunikationsschnittstelle an eine Auswerteeinheit.

25. Verwendung eines Sensors nach einem der Ansprüche 9 bis 17 als Füllstandsmesser.

26. Verwendung eines Sensors nach einem der Ansprüche 9 bis 17 als Näherungssensor.

27. Verwendung einer Gravimetereinheit nach einem der Ansprüche 1 bis 8 als Beschleunigungsmesser.

28. Programmelement zur Füllstandsmessung eines Füllgutes in einem Behälter mittels einer Gravitationsfeldauswertung, wobei das Programmelement, wenn es auf einem Prozessor ausgeführt wird, den Prozessor anleitet, die folgenden Operationen auszuführen:

Erzeugen eines Feldes durch eine Quelle;
Detektieren einer ersten Position eines ersten Schwebekörpers der ersten Gravimetereinheit durch einen ersten Detektor;
Ermitteln von ersten Daten, welche mit einer ersten Gravitationsfeldstärke an einem ersten Ort korrespondieren, durch eine erste Gravimetereinheit;
Ermitteln von zweiten Daten, welche mit einer zweiten Gravitationsfeldstärke an einem zweiten Ort korrespondieren, durch eine zweite Gravimetereinheit;
Berechnen eines Füllstandes des Füllgutes auf Basis der ermittelten ersten und zweiten Daten;
wobei das Feld ein elektrisches Feld ist;
wobei der erste Schwebekörper durch das von der Quelle erzeugte elektrische Feld berührungslos in der Schwebe gehalten wird;
wobei die ersten Daten auf Basis der detektierten ersten Position oder dem erzeugten Feld ermittelt werden.
wobei die Quelle zumindest eine erste Elektrode umfasst, zur Erzeugung des elektrischen Feldes; und
wobei der erste Detektor eine zweite Elektrode umfasst, zur Detektion der ersten Position des ersten Schwebekörpers.

29. Ein computerlesbares Speichermedium, auf dem ein Computerprogramm zur Füllstandsmessung eines Füllgutes in einem Behälter mittels einer Gravitationsfeldauswertung gespeichert ist, wobei das Computerprogramm, wenn es auf einem Prozessor ausgeführt wird, den Prozessor anleitet, die folgenden Operationen auszuführen:

Erzeugen eines Feldes durch eine Quelle;
Detektieren einer ersten Position eines ersten Schwebekörpers der ersten Gravimetereinheit durch einen ersten Detektor;
Ermitteln von ersten Daten, welche mit einer ersten Gravitationsfeldstärke an einem ersten Ort korrespondieren, durch eine erste Gravimetereinheit;
Ermitteln von zweiten Daten, welche mit einer zweiten Gravitationsfeldstärke an einem zweiten Ort korrespondieren, durch eine zweite Gravimetereinheit;
Berechnen eines Füllstandes des Füllgutes auf Basis der ermittelten ersten und zweiten Daten;
wobei das Feld ein elektrisches Feld ist;
wobei der erste Schwebekörper durch das von der Quelle erzeugte elektrische Feld berührungslos in der Schwebe gehalten wird;
wobei die ersten Daten auf Basis der detektierten ersten Position oder dem erzeugten Feld ermittelt werden.
wobei die Quelle zumindest eine erste Elektrode umfasst, zur Erzeugung des elektrischen Feldes; und
wobei der erste Detektor eine zweite Elektrode umfasst, zur Detektion der ersten Position des ersten Schwebekörpers.

**Claims**

1. A gravimeter unit for determining a gravitational field strength, with the gravimeter unit comprising:

   a first floating body;
   a first detector;
   a source for generating a field;
   wherein the first floating body can be held in a non-contacting manner in suspension by means of a field generated by the source;
   wherein a first position of the first floating body is detectable by means of the first detector;
   wherein the gravimeter unit is designed to determine first data on the basis of the detected first position or the generated field;
   wherein the first data corresponds to a first gravitational field strength at a first location;
   wherein the field is an electric field;
   wherein the source comprises at least one first electrode, for generating the electric field; and
   wherein the first detector comprises a second electrode, for detecting the first position of the first floating body.

2. The gravimeter unit according to claim 1,
   wherein the first detector is designed for capacitive, inductive, conductive or visual detection of the first position of the first floating body.

3. The gravimeter unit according to claim 1,
   wherein the floating body is arranged in a hollow space filled with a dielectric.

4. The gravimeter unit according to any one of claims 1 to 3, further comprising:

   a second floating body;
   a second detector;
   wherein a second position of the second floating body is detectable by the second detector; and
   wherein the gravimeter unit is designed to generate the first data based on the measured first position and on the measured second position.

5. The gravimeter unit according to any one of claims 1 to 4, further comprising:

   a control device;
   wherein the control device is designed to hold the first floating body in a home position.

6. The gravimeter unit according to claim 5,
   wherein the control device controls the strength of the field that is generated by the source, based on the first position of the first floating body, which position has been detected by the first detector, so that the first floating body is kept in its home position; and
   wherein the gravimeter unit is designed to generate the first data based on a control parameter of the control device.

7. The gravimeter unit according to any one of claims 1 to 6, further comprising:

   a storage device;
   wherein the storage device is designed to store reference values.

8. The gravimeter unit according to any one of claims 1 to 7,
   wherein the gravimeter unit is arranged on a semiconductor chip.

9. A sensor for material detection by means of gravitational field evaluation, with the sensor comprising:

   a first gravimeter unit according to any one of claims 1 to 8;
   a second gravimeter unit according to any one of claims 1 to 8;
   a communication interface;
   wherein the first gravimeter unit is designed to determine first data that corresponds to a first gravitational field strength at a first location;

wherein the second gravimeter unit is designed to determine second data that corresponds to a second gravitational field strength at a second location; and

wherein the communication interface is designed to transmit the first data and the second data to an evaluation unit.

**10.** The sensor according to claim 9,

wherein the determined first data is based on first floating body position data or on first control parameters of a first control device; and

wherein the determined second data is based on second floating body position data or on second control parameters of a second control device.

**11.** The sensor according to claim 9 or 10,

wherein the first and the second gravimeter units are arranged relative to each other at fixed positions in the sensor.

**12.** The sensor according to any one of claims 9 to 11,

wherein the first gravimeter unit is arranged so as to be rotatable on an axis or slidable along a common axis;

wherein the first gravimeter unit is designed to measure, during rotation or displacement, a first volume data record that comprises the first data.

**13.** The sensor according to any one of claims 9 to 12, further comprising:

wherein the sensor, apart from the first and the second gravimeter unit, comprises a multitude of third gravimeter units that together with the first and the second gravimeter units form a one-dimensional, two-dimensional or three-dimensional array for measuring a line data record, area data record or volume data record.

**14.** The sensor according to any one of claims 9 to 13, further comprising:

an evaluation unit;

wherein the evaluation unit is designed to receive the first data and the second data from the communication interface; and

wherein the evaluation unit is designed to calculate a gradient of a gravitational field based on the first data and on the second data.

**15.** The sensor according to claim 14,

wherein the evaluation unit is designed to calculate the local mass distribution in the surroundings of the sensor.

**16.** The sensor according to claim 14 or 15,

wherein the evaluation unit is designed to calculate the fill level of a container, based on the first data and on the second data.

**17.** The sensor according to any one of claims 9 to 16,

wherein the sensor is arranged on a semiconductor chip.

**18.** A method for measuring the fill level of a product in a container by means of gravitational field evaluation, with the method comprising the following steps:

generating a field by means of a source;

detecting a first position of a first floating body of the first gravimeter unit by means of a first detector;

determining first data, which corresponds to a first gravitational field strength at a first location, by means of a first gravimeter unit;

determining second data, which corresponds to a second gravitational field strength at a second location, by means of a second gravimeter unit; calculating the fill level of the product, based on the determined first and second data;

wherein the field is an electric field;

wherein the first floating body is held in a non-contacting manner in suspension by means of the electric field generated by the source;

wherein the first data is determined based on the detected first position or on the generated field;

wherein the source comprises a first electrode, for generating the electric field; and

wherein the first detector comprises a second electrode, for detecting the first position of the first suspended body.

**19.** The method according to claim 18,
wherein the field is selected from the group comprising an electric field, magnetic field, electromagnetic field and a mechanical flow field.

**20.** The method according to any one of claims 18 to 19,
wherein the first detector is designed for capacitive, inductive, conductive or optical detection of the first position of the first floating body.

**21.** The method according to any one of claims 18 to 20,
wherein calculating the fill level comprises calculating a gradient of a gravitational field in the region of the product, based on the first data and on the second data.

**22.** The method according to any one of claims 18 to 21,
wherein the first and the second gravimeter units are arranged relative to each other at fixed positions in a sensor.

**23.** The method according to any one of claims 18 to 22, further comprising the step of:

rotating the first gravimeter unit on an axis, or displacing the first gravimeter unit along an axis;
wherein the first gravimeter unit is designed to measure, during rotation or displacement, a first volume data record that comprises the first data.

**24.** The method according to any one of claims 18 to 23, further comprising the step of:

by way of a communication interface, transmitting the first data and the second data to an evaluation unit.

**25.** The use of a sensor according to any one of claims 9 to 17 as a fill level meter.

**26.** The use of a sensor according to any one of claims 9 to 17 as a proximity sensor.

**27.** The use of a gravimeter unit according to any one of claims 1 to 8 as an acceleration meter.

**28.** A program element for measuring the fill level of a product in a container, by means of gravitational field evaluation, wherein the program element, when executed on a processor, instructs the processor to carry out the following operations:

generating a field by means of a source;
detecting a first position of a first floating body of the first gravimeter unit by means of a first detector;
determining first data, which corresponds to a first gravitational field strength at a first location, by means of a first gravimeter unit;
determining second data, which corresponds to a second gravitational field strength at a second location, by means of a second gravimeter unit; calculating the fill level of the product, based on the determined first and second data;
wherein the field is an electric field;
wherein the first floating body is held in a non-contacting manner in suspension by means of the electric field generated by the source;
wherein the first data is determined based on the detected first position or on the generated field;
wherein the source comprises at least one first electrode, for generating the electric field; and
wherein the first detector comprises a second electrode, for detecting a first position of the first suspended body.

**29.** A computer-readable storage medium on which a computer program for measuring the fill level of a product in a container is stored by means of gravitational field evaluation, wherein the computer program, when executed on a processor, instructs the processor to carry out the following operations:

generating a field by means of a source;
detecting a first position of a first floating body of the first gravimeter unit by means of a first detector;
determining first data, which corresponds to a first gravitational field strength at a first location, by means of a first gravimeter unit;
determining second data, which corresponds to a second gravitational field strength at a second location, by means of a second gravimeter unit; calculating the fill level of the product, based on the determined first and second data;

wherein the field is an electric field;

wherein the first floating body is held in a non-contacting manner in suspension by means of the electric field generated by the source;

wherein the first data is determined based on the detected first position or on the generated field;

wherein the source comprises at least one first electrode, for generating the electric field; and

wherein the first detector comprises a second electrode, for detecting the first position of the first floating body.

## Revendications

1. Unité gravimétrique pour déterminer d'une intensité de champ de gravitation, l'unité gravimétrique comprenant :

   un premier corps flottant ;
   un premier détecteur ;
   une source pour la génération d'un champ ;
   unité gravimétrique dans laquelle :

   le premier corps flottant peut être maintenu sans contact en suspension par un champ généré par la source ;
   une première position du premier corps flottant peut être détectée par le premier détecteur ;
   l'unité gravimétrique est réalisée pour la détermination de premières données sur la base de la première position détectée ou du champ généré ;
   les premières données correspondent à une première intensité de champ de gravitation en un premier endroit ;
   le champ est un champ électrique ;
   la source comprend au moins une première électrode, pour générer le champ électrique; et
   le premier détecteur comprend une deuxième électrode, pour détecter la première position du premier corps flottant.

2. Unité gravimétrique suivant la revendication 1, dans laquelle le premier détecteur est réalisé pour la détection capacitive, inductive, par conduction ou optique de la première position du premier corps flottant.

3. Unité gravimétrique suivant la revendication 1, dans laquelle le corps flottant est disposé dans un espace creux rempli d'un diélectrique.

4. Unité gravimétrique suivant l'une des revendications 1 à 3, comprenant en outre :

   un deuxième corps flottant ;
   un deuxième détecteur ;
   unité gravimétrique dans laquelle,
   une deuxième position du deuxième corps flottant peut être détectée par le deuxième détecteur ; et
   l'unité gravimétrique est réalisée pour générer les premières données sur la base de la première position mesurée et de la deuxième position mesurée.

5. Unité gravimétrique suivant l'une des revendications 1 à 4, comprenant en outre :

   un dispositif de réglage ;
   unité dans laquelle le dispositif de réglage est réalisé pour maintenir le premier corps flottant dans une position initiale.

6. Unité gravimétrique suivant la revendication 5, dans laquelle
   le dispositif de réglage règle une intensité du champ généré par la source sur la base de la première position, détectée par le premier détecteur, du premier corps flottant, de sorte que le premier corps flottant est maintenu dans la position initiale ; et
   l'unité gravimétrique est réalisée pour générer les premières données sur la base d'un paramètre de réglage du dispositif de réglage.

**7.** Unité gravimétrique suivant l'une des revendications 1 à 6, comprenant en outre :

un dispositif de mémorisation ;
le dispositif de mémorisation étant réalisé pour mémoriser des valeurs de référence.

**8.** Unité gravimétrique suivant l'une des revendications 1 à 7, l'unité gravimétrique étant réalisée sur une puce à semi-conducteur.

**9.** Détecteur pour la détection de matières au moyen d'une évaluation de champ de gravitation, le détecteur comprenant :

une première unité gravimétrique suivant l'une des revendications 1 à 8 ;
une deuxième unité gravimétrique suivant l'une des revendications 1 à 8 ;
une interface de communication ;
détecteur, dans lequel
la première unité gravimétrique est réalisée pour la détermination de premières données, qui correspondent à une première intensité du champ de gravitation en un premier endroit ;
la deuxième unité gravimétrique est réalisée pour la détermination de deuxièmes données, qui correspondent à une deuxième intensité du champ de gravitation en un deuxième endroit ; et
l'interface de communication est réalisée pour la transmission des premières données et des deuxièmes données à une unité d'évaluation.

**10.** Détecteur suivant la revendication 9, dans lequel,
les premières données déterminées sont basées sur des premières données de position de corps flottant ou sur des premiers paramètres de réglage d'un premier dispositif de réglage ; et
les deuxièmes données déterminées sont basées sur des deuxièmes données de position de corps flottant ou sur des deuxièmes paramètres de réglage d'un deuxième dispositif de réglage.

**11.** Détecteur suivant l'une des revendications 9 et 10, dans lequel la première et la deuxième unité gravimétrique sont disposées l'une par rapport à l'autre dans le détecteur en des positions fixes.

**12.** Détecteur suivant l'une des revendications 9 à 11, dans lequel
la première unité gravimétrique est disposée avec une possibilité de rotation autour d'un axe ou de déplacement le long d'un axe commun ;
la première unité gravimétrique est réalisée, pendant une rotation ou un déplacement, pour la mesure d'un premier article de volumes, qui comprend les premières données.

**13.** Détecteur suivant l'une des revendications 9 à 12, dans lequel le détecteur comprend, outre la première et la deuxième unité gravimétrique, une pluralité de troisièmes unités gravimétriques qui réalisent, avec la première et la deuxième unité gravimétrique, une matrice mono-, bi- ou tridimensionnelle pour la mesure d'un article de lignes, de surfaces ou de volumes.

**14.** Détecteur suivant l'une des revendications 9 à 13, comprenant en outre :

une unité d'évaluation ;
détecteur dans lequel
l'unité d'évaluation est réalisée pour la réception des premières données et des deuxièmes données par l'interface de communication ; et
l'unité d'évaluation est réalisée pour le calcul d'un gradient d'un champ de gravitation sur la base des premières données et des deuxièmes données.

**15.** Détecteur suivant la revendication 14, dans lequel l'unité d'évaluation est réalisée pour le calcul d'une distribution de masses locale dans l'environnement du détecteur.

**16.** Détecteur suivant l'une des revendications 14 et 15, dans lequel l'unité d'évaluation est réalisée pour le calcul d'un niveau de remplissage d'un réservoir sur la base des premières et des deuxièmes données.

**17.** Détecteur suivant l'une des revendications 9 à 16, le détecteur étant réalisé sur une puce à semi-conducteur.

**18.** Procédé pour la mesure du niveau de remplissage d'une charge dans un réservoir au moyen d'une évaluation du champ de gravitation, le procédé comprenant les étapes suivantes :

génération d'un champ par une source ;

détection d'une première position d'un premier corps flottant de la première unité gravimétrique par un premier détecteur ;

détermination de premières données, qui correspondent à une première intensité du champ de gravitation en un premier endroit, par une première unité gravimétrique ;

détermination de deuxièmes données, qui correspondent à une deuxième intensité du champ de gravitation en un deuxième endroit, par une deuxième unité gravimétrique ;

calcul d'un niveau de remplissage de la charge sur la base des premières et des deuxièmes données déterminées ;

procédé, dans lequel :

le champ est un champ électrique ;

le premier corps flottant est maintenu sans contact en suspension par le champ électrique généré par la source ;

les premières données sont déterminées sur la base de la première position détectée ou du champ généré ;

la source comprend au moins une première électrode, pour générer le champ électrique ; et

le premier détecteur comprend une deuxième électrode, pour la détection de la première position du premier corps flottant.

**19.** Procédé suivant la revendication 18, dans lequel le champ est sélectionné parmi le groupe constitué du champ électrique, du champ magnétique, du champ électro-magnétique et du champ d'écoulement mécanique.

**20.** Procédé suivant l'une des revendications 18 à 19, dans lequel le premier détecteur est réalisé pour la détection capacitive, inductive, par conduction ou optique de la première position du premier corps flottant.

**21.** Procédé suivant l'une des revendications 18 à 20, dans lequel le calcul du niveau de remplissage comprend un calcul d'un gradient d'un champ de gravitation dans la zone de la charge sur la base des premières données et des deuxièmes données.

**22.** Procédé suivant l'une des revendications 18 à 21, dans lequel la première et la deuxième unité gravimétrique sont disposées l'une par rapport à l'autre dans un détecteur en des positions fixes.

**23.** Procédé suivant l'une des revendications 18 à 22, comprenant en outre l'étape :

rotation de la première unité gravimétrique autour d'un axe ou déplacement de la première unité gravimétrique le long d'un axe ;

procédé dans lequel la première unité gravimétrique est réalisée, pendant une rotation ou un déplacement, pour la mesure d'un premier article de volumes, qui comprend les premières données.

**24.** Procédé suivant l'une des revendications 18 à 23, comprenant en outre une étape de transmission des premières données et des deuxièmes données à une unité d'évaluation par une interface de communication.

**25.** Utilisation d'un détecteur suivant l'une des revendications 9 à 17 en tant que dispositif de mesure de niveau.

**26.** Utilisation d'un détecteur suivant l'une des revendications 9 à 17 en tant que détecteur de proximité.

**27.** Utilisation d'une unité gravimétrique suivant l'une des revendications 1 à 8 en tant qu'accéléromètre.

**28.** Elément de programme pour la mesure du niveau de remplissage d'une charge dans un réservoir au moyen d'une évaluation du champ de gravitation, l'élément de programme, lorsqu'il est exécuté sur un processeur, donnant au processeur l'ordre de réaliser les opérations suivantes :

génération d'un champ par une source ;

détection d'une première position d'un premier corps flottant de la première unité gravimétrique par un premier détecteur ;

détermination de premières données, qui correspondent à une première intensité du champ de gravitation en un premier endroit, par une première unité gravimétrique ;

détermination de deuxièmes données, qui correspondent à une deuxième intensité du champ de gravitation en un deuxième endroit, par une deuxième unité gravimétrique ;

calcul d'un niveau de remplissage de la charge sur la base des premières et des deuxièmes données déterminées ;

élément de programme dans lequel,

le champ est un champ électrique ;

le premier corps flottant est maintenu sans contact en suspension par le champ électrique généré par la source ;

les premières données sont déterminées sur la base de la première position détectée ou du champ généré ;

la source comprend au moins une première électrode, pour générer le champ électrique ; et

le premier détecteur comprend une deuxième électrode, pour la détection de la première position du premier corps flottant.

29. Support d'information lisible par ordinateur, sur lequel est mémorisé un programme ordinateur pour la mesure du niveau de remplissage d'une charge dans un réservoir au moyen d'une évaluation du champ de gravitation, le programme ordinateur, lorsqu'il est exécuté sur un processeur, donnant au processeur l'ordre de réaliser les opérations suivantes :

génération d'un champ par une source ;

détection d'une première position d'un premier corps flottant de la première unité gravimétrique par un premier détecteur ;

détermination de premières données, qui correspondent à une première intensité du champ de gravitation en un premier endroit, par une première unité gravimétrique ;

détermination de deuxièmes données, qui correspondent à une deuxième intensité du champ de gravitation en un deuxième endroit, par une deuxième unité gravimétrique ;

calcul d'un niveau de remplissage de la charge sur la base des premières et des deuxièmes données déterminées ;

support d'information dans lequel,

le champ est un champ électrique ;

le premier corps flottant est maintenu sans contact en suspension par le champ électrique généré par la source ;

les premières données sont déterminées sur la base de la première position détectée ou du champ généré ;

la source comprend au moins une première électrode, pour générer le champ électrique ; et

le premier détecteur comprend une deuxième électrode, pour la détection de la première position du premier corps flottant.

FIG 1

FIG 2

FIG 3

FIG 4

FIG 5

FIG 6

FIG 7

EP 1 820 048 B1

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6612171 B1
- DE 6891545 T2
- WO 9857197 A

- US 6799462 B
- US 3424006 A
- US 3449956 A